(19) Europäisches Patentamt

European Patent Office

Office européen des brevets

(11) **EP 1 521 231 A2**

(12) **EUROPEAN PATENT APPLICATION**

(43) Date of publication:
**06.04.2005 Bulletin 2005/14**

(51) Int Cl.7: **G09G 3/22**

(21) Application number: **04256108.4**

(22) Date of filing: **01.10.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **03.10.2003 JP 2003345992**
**25.06.2004 JP 2004187625**
**08.12.2003 US 730754**

(71) Applicant: **NGK INSULATORS, LTD.**
**Nagoya-City, Aichi Prefecture 467-8530 (JP)**

(72) Inventors:
- **Takeuchi, Yukihisa**
  **Nagoya-city Aichi-pref. 467-8530 (JP)**
- **Nanataki, Tsutomu**
  **Nagoya-city Aichi-pref. 467-8530 (JP)**
- **Ohwada, Iwao**
  **Nagoya-city Aichi-pref. 467-8530 (JP)**

(74) Representative: **Naylor, Matthew John et al**
**Mewburn Ellis LLP**
**York House,**
**23 Kingsway**
**London WC2B 6HP (GB)**

(54) **Electron emitter, electron emission device, display, and light source**

(57)     An electron emitter (10A) includes a lower electrode (16) formed on a glass substrate (11), an emitter section (12) made of dielectric film formed on the lower electrode (16), and an upper electrode (14) formed on the emitter section (12). A drive voltage (Va) for electron emission is applied between the upper electrode (14) and the lower electrode (16). At least the upper electrode (14) has a plurality of through regions (20) through which the emitter section (12) is exposed. The upper electrode (14) has a surface which faces the emitter section (12) in peripheral portions of the through regions (20) and which is spaced from the emitter section (12).

FIG. 22

EP 1 521 231 A2

## Description

BACKGROUND OF THE INVENTION

Field of the Invention:

The present invention relates to an electron emitter formed on a glass substrate, an electron emission device including a plurality of the electron emitters, a display using the electron emission device, and a light source using the electron emission device.

Description of the Related Art:

In recent years, electron emitters having a cathode electrode and an anode electrode have been used in various applications such as field emission displays (FEDs) and backlight units. In an FED, a plurality of electron emitters are arranged in a two-dimensional array, and a plurality of phosphors are positioned at predetermined intervals in association with the respective electron emitters.

Conventional electron emitters are disclosed in Japanese laid-open patent publication No. 1-311533, Japanese laid-open patent publication No. 7-147131, Japanese laid-open patent publication No. 2000-285801, Japanese patent publication No. 46-20944, and Japanese patent publication No. 44-26125, for example. All of these disclosed electron emitters are disadvantageous in that since no dielectric material is employed in the emitter section, a forming process or a micromachining process is required between facing electrodes, a high voltage needs to be applied between the electrodes to emit electrons, and a panel fabrication process is complex and entails a high production cost.

It has been considered to make an emitter section of a dielectric material. Various theories about the emission of electrons from a dielectric material have been presented in the documents: Yasuoka and Ishii, "Pulsed Electron Source Using a Ferroelectric Cathode", OYO BUTURI (A monthly publication of The Japan Society of Applied Physics), Vol. 68, No. 5, pp. 546-550 (1999), V.F. Puchkarev, G.A. Mesyats, "On the Mechanism of Emission from the Ferroelectric Ceramic Cathode", J. Appl. Phys., Vol. 78, No. 9, 1 November, 1995, pp. 5633-5637, and H. Riege, "Electron Emission from Ferroelectrics - A Review", Nucl. Instr. and Meth. A340, pp. 80-89 (1994).

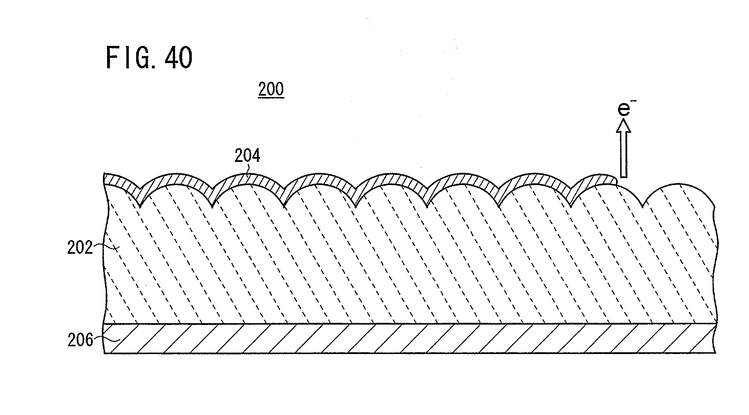

As shown in FIG. 40, when an upper electrode 204 and a lower electrode 206 are formed on an emitter section 202 in a conventional electron emitter 200, the upper electrode 204 in particular is formed in intimate contact with the emitter 202. A point where electric field concentrates is a triple point made up of the upper electrode 204, the emitter 202, and the vacuum, and corresponds to a peripheral edge portion of the upper electrode 204.

However, since the peripheral edge portion of the upper electrode 204 is in intimate contact with the emitter 202, the degree of electric field concentration is small and the energy required to emit electrons is large. Furthermore, because an electron emission region is limited to the peripheral edge portion of the upper electrode 204, the overall electron emission characteristics tend to vary, making it difficult to control the emission of electrons and also making the electron emission efficiency low.

SUMMARY OF THE INVENTION

The present invention has been made in view of the above drawbacks. Preferably, it is an object of the present invention to provide an electron emitter and an electron emission device having advantages in producing a large panel and reducing the production cost, in which a high electric field concentration achieved easily, many electron emission regions are created, and electrons are emitted highly efficiently with a large output at a low voltage.

Preferably, another object of the present invention is to provide a display and a light source with high luminance at low cost using an electron emission device having advantages in producing a large panel and reducing the production cost, in which electrons are emitted highly efficiently with a large output at a low voltage.

According to an aspect of the present invention, an electron emitter comprises a first electrode formed on a glass substrate, an emitter section made of a dielectric film formed on the first electrode, and a second electrode formed on the emitter section. A drive voltage for electron emission is applied between the first electrode and the second electrode. At least the second electrode has a plurality of through regions through which the emitter section is exposed. The second electrode has a surface which faces the emitter section in peripheral portions of the through regions and which is spaced from the emitter section.

According to another aspect of the present invention, an electron emission device includes a plurality of electron emitters formed on a glass substrate. Each of the electron emitters comprises a first electrode formed on the glass substrate, an emitter section made of a dielectric film formed on the first electrode, a second electrode formed on the emitter section. A drive voltage for electron emission is applied between the first electrode and the second electrode, at least the second electrode has a plurality of through regions through which the emitter section is exposed. The second electrode has a surface which faces the emitter section in peripheral portions of the through regions and which is spaced from the emitter section.

According to another aspect of the present invention, a display comprises the above electron emission device. The display further comprises a transparent plate provided on a surface of the glass substrate facing the emitter section of the electron emission device, an electrode formed on a surface of the transparent plate facing the emitter section for generating an electric field between the electrode and the electron emitter of the electron emission device, and a phosphor formed on the electrode. The phosphor is energized to emit light when electrons emitted from the electron emitter impinge on the phosphor.

According to another aspect of the present invention, a light source comprises the above electron emission device. The light source further comprises a transparent plate provided on a surface of the glass substrate facing the emitter section of the electron emission device, an electrode formed on a surface of the transparent plate facing the emitter section for generating an electric field between the electrode and the electron emitter of the electron emission device, and a phosphor formed on the electrode. The phosphor is energized to emit light when electrons emitted from the electron emitter impinge on the phosphor.

First, a drive voltage is applied between the first electrode and the second electrode. The drive voltage is defined as a voltage, such as a pulse voltage or an alternating-current voltage, which abruptly changes, with time, from a voltage level higher or lower than a reference voltage (e.g., 0 V) to a voltage level that is lower or higher than the reference voltage.

A triple junction is formed in a region of contact between a surface on which the second electrode is formed, the second electrode, and a medium (e.g., a vacuum) around the electron emitter. The triple junction is defined as an electric field concentration region formed by a contact between the second electrode, the emitter section, and the vacuum. The triple junction includes a triple point where the second electrode, the emitter section, and the vacuum exist as one point. According to the present invention, the triple junction is formed the peripheral portions of the through regions and the peripheral area of the second electrode. Therefore, when the drive voltage is applied between the first electrode and the second electrode, an electric field concentration occurs at the triple junction.

In the first stage, the voltage higher or lower than the reference voltage is applied between the first electrode and the second electrode, producing an electric field concentration in one direction, for example, at the triple junction and/or the tip of the second electrode. Electrons are emitted from the second electrode toward the emitter section, and accumulated in the portions of the emitter section which correspond to the through regions of the second electrode and the portion of the emitter section near the peripheral portion of the second electrode. That is, the emitter section is charged. At this time, the second electrode functions as an electron supply source.

In the second stage, the voltage level of the drive voltage abruptly changes, i.e., the voltage lower or higher than the reference voltage is applied between the first electrode and the second electrode. The electrons that have been accumulated in the portions corresponding to the through regions of the second electrode and the regions near the peripheral portion of the second electrode are expelled from the emitter section by dipoles (whose negative poles appear on the surface of the emitter section) in the emitter section whose polarization has been reversed in the opposite direction. The electrons are emitted from the portions of the emitter section where the electrons have been accumulated, through the through regions. The electrons are also emitted from the regions near the outer peripheral portion of the second electrode. At this time, electrons in correspondence with the amount of charges in the emitter section in the first stage are emitted from the emitter section in the second stage. The amount of charges in the emitter section in the first stage is maintained until electrons are emitted in the second stage.

According to another electron emission process, in a first output period, the electron emitter is prepared for electron emission (e.g., the emitter section is polarized in one direction). In a next second output period, when the voltage level of the drive voltage is quickly changed, an electric field concentration occurs at the triple junction and/or the tip of the second electrode, causing the second electrode to emit primary electrons, which impinge upon the portions of the emitter section which are exposed through the through regions and the regions near the outer peripheral portion of the second electrode. Secondary electrons (including reflected primary electrons) are emitted from the portions hit by the primary electrons. Thus, secondary electrons are emitted from the through regions and the regions near the outer peripheral portion of the second electrode in an initial stage of the second output period.

Since the second electrode of the electron emitter has the through regions, electrons are uniformly emitted from each of the through regions and the outer peripheral portions of the second electrode. Thus, any variations in the overall electron emission characteristics of the electron emitter are reduced, making it possible to facilitate the control of the electron emission and increase the electron emission efficiency.

According to aspects of the present invention, furthermore, because a gap is formed between the surface of the second electrode which faces the emitter section in the peripheral portions of the through regions and the emitter section, when the drive voltage is applied, an electric field concentration tends to be produced in the region of the gap. This leads to a higher efficiency of the electron emission, making the drive voltage lower (emitting electrons at a lower voltage level).

As described above, according to aspects of the present invention, since the gap is formed between the surface of the second electrode which faces the emitter section in the peripheral portions of the through regions and the emitter section, providing overhanging portions (flanges) on the peripheral portions of the through regions, electrons are easily emitted from the overhanging portions (the peripheral portions of the through regions) of the second electrode, also with the increased electric field concentration in the region of the gap. This leads to a larger output and higher efficiency of the electron emission, making the drive voltage lower. In either one of the process of emitting electrons accumulated in the emitter section and the process of emitting secondary electrons by causing primary electrons from the second electrode to impinge upon the emitter section, as the peripheral portions of the through regions of the first electrode function as a gate electrode (a control electrode, a focusing electronic lens, or the like), the straightness of emitted electrons can be increased. This is effective in reducing crosstalk if electron emitters are arrayed for use as an electron source of a display.

As described above, the electron emitter according to aspects of the present invention is capable of easily developing a high electric field concentration, provides many electron emission regions, has a larger output and higher efficiency of the electron emission, and can be driven at a lower voltage (lower power consumption). In particular, since the glass substrate is employed, it is possible to produce a large panel, and reduce the production cost. Further, it is possible to lower the process temperature for producing the electron emitter, and lower the cost for facilities. Crystallized glass may be used for the glass substrate. In this case, unlike the normal glass, since the process temperature is in a range from 600 to 800°c, selection of the material can be carried out freely. Since the glass plate is employed, it is possible to produce a large panel corresponding to a back light for a large screen display or a large screen liquid display. Further, when a vacuum tube hermetically containing the electron emitter is fabricated, a tube wall and a spacer, or a transparent plate forming a phosphor may be made of glass, and these components can be adhered to the glass substrate, using a frit, on which the electron emitter is formed. Conversely, when the electron emitter is formed on a substrate which is not made of glass, since the thermal expansion coefficient of the other glass members and the thermal expansion coefficient of the frit do not match, the tube fabrication is difficult.

According to aspects of the present invention, at least a surface of emitter section for forming the second electrode may have surface irregularities due to the grain boundary of the dielectric material, and the through regions of the second electrode may be formed in regions corresponding to concavities of the surface irregularities due to the grain boundary of the dielectric material. Further, the second electrode may be in the form of a cluster of a plurality of scale-like substances or a cluster of a plurality of electrically conductive substances including scale-like substances.

Thus, it is possible to easily achieve the structure where second electrode has a surface which faces the emitter section in peripheral portions of the through regions and which is spaced from the emitter section, i. e., the structure where a gap is formed between the surface of the second electrode which faces the emitter section in the peripheral portions of the through regions and the emitter section.

As described above, the electron emitter and the electron emission device according to aspects of the present invention are capable of easily developing a high electric field concentration, provides many electron emission regions, has a larger output and higher efficiency of the electron emission, and can be driven at a lower voltage (lower power consumption). Thus, the electron emitter and the electron emission device are advantageous in producing a large panel and reducing the production cost.

Further, the display and the light source according to aspects of the present invention have a large screen or large area, and high luminance. The display and light source can be produced at low cost.

The above and other objects, features, and advantages of the present invention will become more apparent from the following description when taken in conjunction with the accompanying drawings in which preferred embodiments of the present invention are shown by way of illustrative example.

BRIEF DESCRIPTION OF THE DRAWINGS

FIG. 1 is a fragmentary cross-sectional view showing an electron emitter according to a first embodiment of the present invention;
FIG. 2 is an enlarged fragmentary cross-sectional view showing the electron emitter according to the first embodiment of the present invention;
FIG. 3 is an enlarged fragmentary cross-sectional view showing main part of the electron emitter according to the first embodiment;
FIG. 4 is a plan view showing an example of the shape of through regions defined in an upper electrode;
FIG. 5A is a cross-sectional view showing another example of the upper electrode;
FIG. 5B is an enlarged fragmentary cross-sectional view showing main part of the upper electrode;
FIG. 6A is a cross sectional view showing still another example of the upper electrode;
FIG. 6B is an enlarged fragmentary cross-sectional view showing main part of the upper electrode;
FIG. 7 is a diagram showing the voltage waveform of a drive voltage according to a first electron emission process;
FIG. 8 is a view illustrative of the emission of electrons in a second output period (second stage) of the first electron emission process;
FIG. 9 is a diagram showing the voltage waveform of a drive voltage according to a second electron emission process;

FIG. 10 is a view illustrative of the emission of electrons in a second output period (second stage) of the second electron emission process;

FIG. 11 is a view showing a cross-sectional shape of an overhanging portion of the upper electrode;

FIG. 12 is a view showing a cross-sectional shape of another overhanging portion of the upper electrode;

FIG. 13 is a view showing a cross-sectional shape of still another overhanging portion of the upper electrode;

FIG. 14 is an equivalent circuit diagram showing a connected state of various capacitors connected between an upper electrode and a lower electrode;

FIG. 15 is a diagram illustrative of capacitance calculations of the various capacitors connected between the upper electrode and the lower electrode;

FIG. 16 is a fragmentary plan view of a first modification of the electron emitter according to the first embodiment;

FIG. 17 is a fragmentary plan view of a second modification of the electron emitter according to the first embodiment;

FIG. 18 is a fragmentary plan view of a third modification of the electron emitter according to the first embodiment;

FIG. 19 is a diagram showing the voltage vs. charge quantity characteristics (voltage vs. polarized quantity characteristics) of the electron emitter according to the first embodiment;

FIG. 20A is a view illustrative of a state at a point p1 shown in FIG. 19;

FIG. 20B is a view illustrative of a state at a point p2 shown in FIG. 19;

FIG. 20C is a view illustrative of a state from the point p2 to a point p3 shown in FIG. 19;

FIG. 21A is a view illustrative of a state from the point p3 to a point p4 shown in FIG. 19;

FIG. 21B is a view illustrative of a state immediately prior to a point p4 shown in FIG. 19;

FIG. 21C is a view illustrative of a state from the point p4 to a point p6 shown in FIG. 19;

FIG. 22 is a block diagram of a display area and a drive circuit of a display which is constructed using electron emitters according to the first embodiment;

FIGS. 23A through 23C are waveform diagrams illustrative of the amplitude modulation of pulse signals by an amplitude modulating circuit;

FIG. 24 is a block diagram of a signal supply circuit according to a modification;

FIG. 25A through 25C are waveform diagrams illustrative of the pulse width modulation of pulse signals by a pulse width modulating circuit;

FIG. 26A is a diagram showing a hysteresis curve plotted when a voltage Vsl shown in FIG. 23A or 25A is applied;

FIG. 26B is a diagram showing a hysteresis curve plotted when a voltage Vsm shown in FIG. 23B or 25B is applied;

FIG. 26C is a diagram showing a hysteresis curve plotted when a voltage Vsh shown in FIG. 23C or 25C is applied;

FIG. 27 is a view showing a layout of a collector electrode, a phosphor, and a transparent plate on the upper electrode;

FIG. 28 is a view showing another layout of a collector electrode, a phosphor, and a transparent plate on the upper electrode;

FIG. 29A is a diagram showing the waveform of a write pulse and a turn-on pulse that are used in a first experimental example (an experiment for observing the emission of electrons from an electron emitter);

FIG. 29B is a diagram showing the waveform of a detected voltage of a light-detecting device, which is representative of the emission of electrons from the electron emitter in the first experimental example;

FIG. 30 is a diagram showing the waveform of a write pulse and a turn-on pulse that are used in second through fourth experimental examples;

FIG. 31 is a characteristic diagram showing the results of a second experimental example (an experiment for observing how the amount of electrons emitted from the electron emitter changes depending on the amplitude of a write pulse);

FIG. 32 is a characteristic diagram showing the results of a third experimental example (an experiment for observing how the amount of electrons emitted from the electron emitter changes depending on the amplitude of a turn-on pulse);

FIG. 33 is a characteristic diagram showing the results of a fourth experimental example (an experiment for observing how the amount of electrons emitted from the electron emitter changes depending on the level of a collector voltage);

FIG. 34 is a timing chart illustrative of a drive method for the display;

FIG. 35 is a diagram showing the relationship of applied voltages according to the drive method shown in FIG. 34;

FIG. 36 is a fragmentary cross-sectional view of an electron emitter according to a second embodiment;

FIG. 37 is a fragmentary cross-sectional view of a first modification of the electron emitter according to the second embodiment;

FIG. 38 is a fragmentary cross-sectional view of a second modification of the electron emitter according to the second embodiment;

FIG. 39 is a fragmentary cross-sectional view of a third modification of the electron emitter according to the second embodiment; and

FIG. 40 is a fragmentary cross-sectional view of a conventional electron emitter.

DESCRIPTION OF THE PREFERRED
EMBODIMENTS

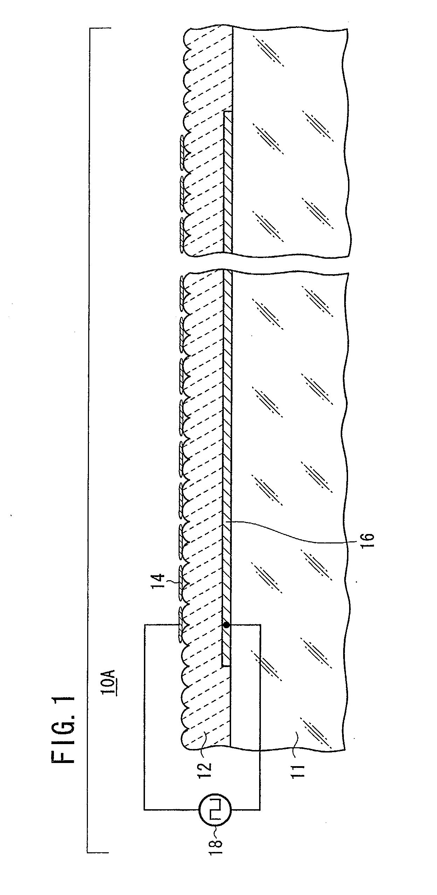

Hereinafter, electron emitters according to embodiments of the present invention will be described below with reference to FIGS. 1 through 39.

Electron emitters according to the present invention can be used in electron beam irradiation apparatus, light sources, alternative to LEDs, electronic parts manufacturing apparatus, and electronic circuit components, as well as display applications.

An electron beam in an electron beam irradiation apparatus has a higher energy and a better absorption capability than ultraviolet rays in ultraviolet ray irradiation apparatus that are presently in widespread use. The electron emitters may be used to solidify insulating films in superposing wafers for semiconductor devices, harden printing inks without irregularities for drying prints, and sterilize medical devices while being kept in packages.

The electron emitters may be used as surface light sources such as backlight units for liquid crystal displays. □The electron emitters may also be used as high-luminance, high-efficiency light sources for use in projectors, for example, which may employ ultrahigh-pressure mercury lamps. The light source using the electron emitters according to the present embodiment is compact, has a long service life, and has a high-speed turn-on capability. The electron emitter does not use any mercury, and the electron emitter is environmentally friendly.

The electron emitters may also be used as alternatives to LEDs, such as surface light sources for indoor lights, automobile lamps, surface light sources for traffic signal devices, chip light sources, and backlight units for traffic signal devices, small-size liquid-crystal display devices for cellular phones.

The electron emitters may also be used in electronic parts manufacturing apparatus as electron beam sources for film growing apparatus such as electron beam evaporation apparatus, electron sources for generating a plasma (to activate a gas or the like) in plasma CVD apparatus, and electron sources for decomposing gases. Electron emitters may also be used in vacuum micro devices including ultrahigh-speed devices operable in a tera-Hz range and large-current output devices. Electron emitters may also preferably be used as printer components, i.e., light emission devices for applying light to a photosensitive drum in combination with a phosphor, and electron sources for charging dielectric materials.

The electron emitters may also be used in electronic circuit components including digital devices such as switches, relays, diodes, etc. and analog devices such as operational amplifiers, etc. as they can be designed for outputting large currents and higher amplification factors.

As shown in FIG. 1, an electron emitter 10A according to a first embodiment is formed on a glass substrate 11. The electron emitter 10A includes a plate-like emitter section 12 made of a dielectric material, a first electrode (e.g., a lower electrode) 16 formed on a first surface (e.g., a lower surface) of the emitter section 12, a second electrode (e.g., an upper electrode) 14 formed on a second surface (e.g., an upper surface) of the emitter section 12, and a pulse generation source 18 for applying a drive voltage Va between the upper electrode 14 and the lower electrode 16.

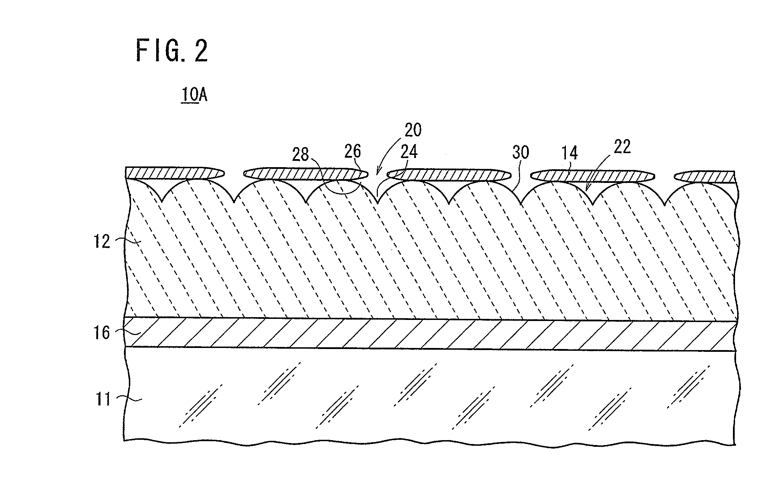

As shown in FIG. 2, the upper electrode 14 has a plurality of through regions 20 where the emitter section 12 is exposed. The emitter section 12 has surface irregularities 22 due to the grain boundary of the dielectric material. The through regions 20 of the upper electrode 14 are formed in areas corresponding to concavities 24 due to the grain boundary of the dielectric material. In an example shown in FIG. 2, one through region 20 is formed in association with one recess 24. However, one through region 20 may be formed in association with a plurality of concavities 24. The particle diameter of the dielectric material of the emitter section 12 should preferably be in the range from 0.1 μm to 10 μm, and more preferably be in the range from 2 μm to 7 μm. In the example shown in FIG. 2, the particle diameter of the dielectric material is of 3 μm.

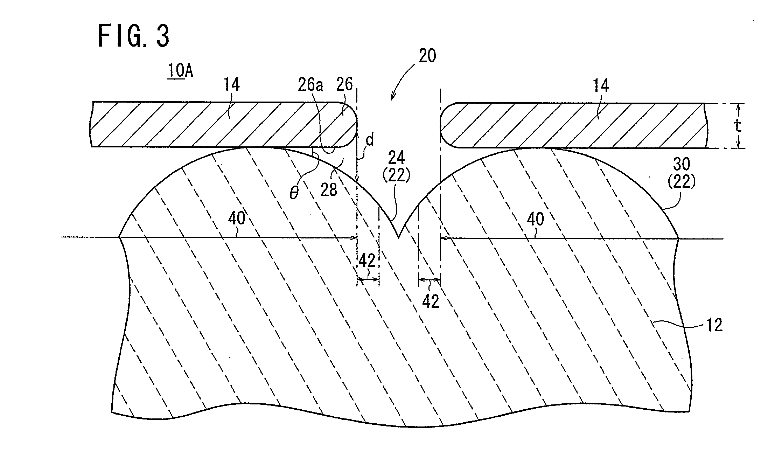

In the first embodiment, as shown in FIG. 3, each of the through regions 20 of the upper electrode 12 has a peripheral portion 26 having a surface 26a facing the emitter section 12. The surface 26a is spaced from the emitter section 12. Specifically, a gap 28 is formed between the surface 26a, facing the emitter section 12, of the peripheral portion 26 of the through region 20 and the emitter section 12, and the peripheral portion 26 of the through region 20 of the upper electrode 14 is formed as an overhanging portion (flange). In the following description, "the peripheral portion 26 of the through region 20 of the upper electrode 14" is referred to as "the overhanging portion 26 of the upper electrode 14". In FIGS. 1, 2, 3, 5A, 5B, 6A, 6B, 8, 10, 11 through 13, and 18, convexities 30 of the surface irregularities 22 of the grain boundary of the dielectric material are shown as having a semicircular cross-sectional shape. However, the convexities 30 are not limited to the semicircular cross-sectional shape.

In the first embodiment, the upper electrode 14 has a thickness t in the range of 0.01 μm ≤ t ≤ 10 μm, and the maximum angle θ between the upper surface of the emitter section 12, i.e., the surface of the convexity 30 (which is also the inner wall surface of the concavity 24) of the grain boundary of the dielectric material, and the lower surface 26a of the overhanging portion 26 of the upper electrode 14 is in the range of 1° ≤ θ ≤ 60°. The maximum distance d in the vertical direction between the surface of the convexity 30 (the inner wall surface of the concavity 24) of the grain boundary of the dielectric material and the lower surface 26a of the overhanging portion 26 of the upper electrode 14 is in the range of 0 μm < d ≤ 10 μm.

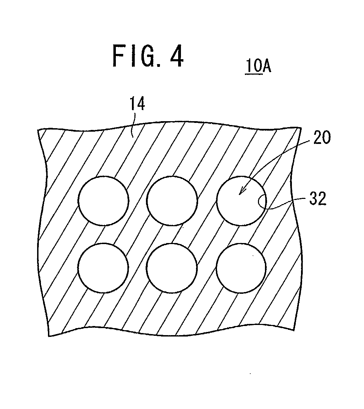

In the first embodiment, the shape of the through region 20, particularly the shape as seen from above, as shown in FIG. 4, is the shape of a hole 32. The shape of the hole 32 may be a circular shape, an elliptical shape, a track shape, and may include a curve, or a polygonal shape such as a quadrangular shape or a triangular shape. In FIG. 4, the shape of the hole 32 is a circular shape.

The hole 32 has an average diameter ranging from 0.1 μm to 10 μm. The average diameter represents the average of the lengths of a plurality of different line segments passing through the center of the hole 32.

Materials of the various components will be described below. The dielectric material which the emitter section 12 is made of may be a dielectric material having a relatively large dielectric constant, e.g., a dielectric constant of 1000 or larger. Dielectric materials of such a nature may be ceramics including barium titanate, lead zirconate, lead magnesium niobate, lead nickel niobate, lead zinc niobate, lead manganese niobate, lead magnesium tantalate, lead nickel tantalate, lead antimony tinate, lead titanate, lead magnesium tungstenate, lead cobalt niobate, etc. or a combination of any of these materials, a material which chiefly contains 50 weight % or more of any of these materials, or such ceramics to which there is added an oxide such as lanthanum, calcium, strontium, molybdenum, tungsten, barium, niobium, zinc, nickel, manganese, or the like, or a combination of these materials, or any of other compounds.

For example, a two-component material nPMN-mPT (n, m represent molar ratios) of lead magnesium niobate (PMN) and lead titanate (PT) has its Curie point lowered for a larger specific dielectric constant at room temperature if the molar ratio of PMN is increased.

Particularly, a dielectric material where n = 0.85 - 1.0 and m = 1.0 - n is preferable because its specific dielectric constant is 3000 or larger. For example, a dielectric material where n = 0.91 and m = 0.09 has a specific dielectric constant of 15000 at room temperature, and a dielectric material where n = 0.95 and m = 0.05 has a specific dielectric constant of 20000 at room temperature.

For increasing the specific dielectric constant of a three-component dielectric material of lead magnesium niobate (PMN), lead titanate (PT), and lead zirconate (PZ), it is preferable to achieve a composition close to a morphotropic phase boundary (MPB) between a tetragonal system and a quasi-cubic system or a tetragonal system and a rhombohedral system, as well as to increase the molar ratio of PMN. For example, a dielectric material where PMN : PT : PZ = 0.375 : 0.375 : 0.25 has a specific dielectric constant of 5500, and a dielectric material where PMN : PT : PZ = 0.5 : 0.375 : 0.125 has a specific dielectric constant of 4500, which is particularly preferable. Furthermore, it is preferable to increase the dielectric constant by introducing a metal such as platinum into these dielectric materials within a range to keep them insulative. For example, a dielectric material may be mixed with 20 weight % of platinum.

The emitter section 12 may be in the form of a piezoelectric/electrostrictive layer or an anti-ferroelectric layer. If the emitter section 12 comprises a piezoelectric/electrostrictive layer, then it may be made of ceramics such as lead zirconate, lead magnesium niobate, lead nickel niobate, lead zinc niobate, lead manganese niobate, lead magnesium tantalate, lead nickel tantalate, lead antimony tinate, lead titanate, barium titanate, lead magnesium tungstenate, lead cobalt niobate, or the like. or a combination of any of these materials.

The emitter section 12 may be made of chief components including 50 wt % or more of any of the above compounds. Of the above ceramics, the ceramics including lead zirconate is mostly frequently used as a constituent of the piezoelectric/electrostrictive layer of the emitter section 12.

If the piezoelectric/electrostrictive layer is made of ceramics, then lanthanum, calcium, strontium, molybdenum, tungsten, barium, niobium, zinc, nickel, manganese, or the like, or a combination of these materials, or any of other compounds may be added to the ceramics. Alternatively, ceramics produced by adding $SiO_2$, $CeO_2$, $Pb_5Ge_3O_{11}$, or a combination of any of these compounds to the above ceramics may be used. Specifically, a material produced by adding 0.2 wt % of $SiO_2$, 0.1 wt % of $CeO_2$, or 1 to 2 wt % of $Pb_5Ge_3O_{11}$ to a PT-PZ-PMN piezoelectric material is preferable.

For example, the piezoelectric/electrostrictive layer should preferably be made of ceramics including as chief components lead magnesium niobate, lead zirconate, and lead titanate, and also including lanthanum and strontium.

The piezoelectric/electrostrictive layer may be dense or porous. If the piezoelectric/electrostrictive layer is porous, then it should preferably have a porosity of 40 % or less.

If the emitter section 12 is in the form of an anti-ferroelectric layer, then the anti-ferroelectric layer may be made of lead zirconate as a chief component, lead zirconate and lead tin as chief components, lead zirconate with lanthanum oxide added thereto, or lead zirconate and lead tin as components with lead zirconate and lead niobate added thereto.

The anti-ferroelectric layer may be porous. If the anti-ferroelectric layer is porous, then it should preferably have a porosity of 30 % or less.

It is prefererable that the emitter section 12 is made of strontium tantalate bismuthate ($SrBi_2Ta_2O_9$), since its polarization reversal fatigue is small. Materials whose polarization reversal fatigue is small are laminar ferroelectric compounds and expressed by the general formula of $(BiO_2)^{2+} (A_{m-1}B_mO_{3m+1})^{2-}$. Ions of the metal A are $Ca^{2+}$, $Sr^{2+}$, $Ba^{2+}$, $Pb^{2+}$, $Bi^{3+}$, $La^{3+}$, etc., and ions

of the metal B are $Ti^{4+}$, $Ta^{5+}$, $Nb^{5+}$, etc.

An additive may be added to piezoelectric ceramics of barium titanate, lead zirconate, and PZT to convert them into a semiconductor. In this case, it is possible to provide an irregular electric field distribution in the emitter section 12 to concentrate an electric field in the vicinity of the interface with the upper electrode 14 which contributes to the emission of electrons.

Piezoelectric/electrostrictive/anti-ferroelectric ceramics is mixed with glass components such as lead borosilicate glass or other compounds having a low melting point such as bismuth oxide to lower the firing temperature.

If the emitter section 12 is made of piezoelectric/electrostrictive/anti-ferroelectric ceramics, then it may be a sheet-like molded body, a sheet-like laminated body, or either one of such bodies stacked or bonded to another support substrate.

If the emitter section 12 is made of a non-lead-based material, then it may be a material having a high melting point or a high evaporation temperature so as to be less liable to be damaged by the impingement of electrons or ions.

The emitter section 12 may be formed on the glass substrate 11 by any of various thick-film forming processes including screen printing, dipping, coating, electrophoresis, aerosol deposition, etc., or any of various thin-film forming processes including an ion beam process, sputtering, vacuum evaporation, ion plating, chemical vapor deposition (CVD), plating, etc.

In the processes, the thick-film forming processes including screen printing, dipping, coating, electrophoresis, etc. are capable of providing good piezoelectric operating characteristics as the emitter section 12 can be formed using a paste, a slurry, a suspension, an emulsion, a sol, or the like which is chiefly made of piezoelectric ceramic particles having an average particle diameter ranging from 0.01 to 5 $\mu$m, preferably from 0.05 to 3 $\mu$m.

In particular, electrophoresis is capable of forming a film at a high density with high shape accuracy, and has features described in technical documents such as: Kazuo Anzai, "Preparation of Electronic Materials by Electrophoretic Deposition", General Institute of Toshiba Corporation, Denki Kagaku 53, No. 1, 1985, pp. 63-68, Atsushi Goto et al., "$PbZrO_3/PbTiO_3$ Composite Ceramics Fabricated by Electrophoretic Deposition", Tokyo Metropolitan University, Tokyo Medical and Dental University, Proceedings of First Symposium on Higher-Order Ceramic Formation Method Based on Electrophoresis, 1998, pp. 5-6, and Kimihiro Yamashita, "Hybridization of Ceramics by Electrophoretic Deposition", Institute for Medical and Dental Engineering, Tokyo Medical and Dental University, Proceedings of First Symposium on Higher-Order Ceramic Formation Method Based on Electrophoresis, 1998, pp. 23-24". Any of the above processes may be chosen in view of the required accuracy and reliability.

Particularly, it is preferable to form a powdery piezoelectric/electrostrictive material as the emitter section 12 and impregnate the emitter section 12 thus formed with glass of a low melting point or sol particles. According to this process, it is possible to form a film at a low temperature of 700°C or lower or 600°C or lower. This process is suitably applicable to the first embodiment where the emitter section 12 is formed on the glass substrate 11. The aerosol deposition is also capable of forming a film at a low temperature.

The upper electrode 14 is made of an organic metal paste which can produce a thin film after being fired. For example, a platinum resinate paste or the like, should preferably be used. An oxide electrode for suppressing a polarization reversal fatigue, which is made of ruthenium oxide ($RuO_2$), iridium oxide ($IrO_2$), strontium ruthenate ($SrRuO_3$), $La_{1-x}Sr_xCoO_3$ (e.g., x = 0.3 or 0.5), $La_{1-x}Ca_xMnO_3$, (e.g., x = 0.2), $La_{1-x}Ca_xMn_{1-y}Co_yO_3$ (e.g., x = 0.2, y = 0.05), or a mixture of any one of these compounds and a platinum resinate paste, for example, is preferable.

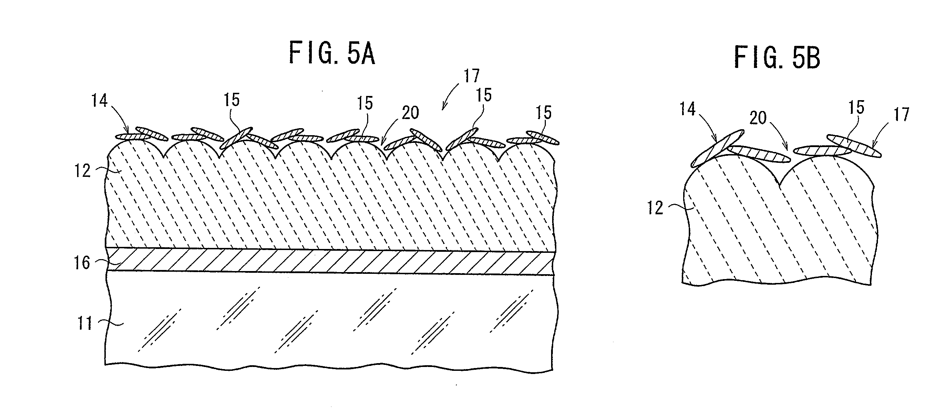

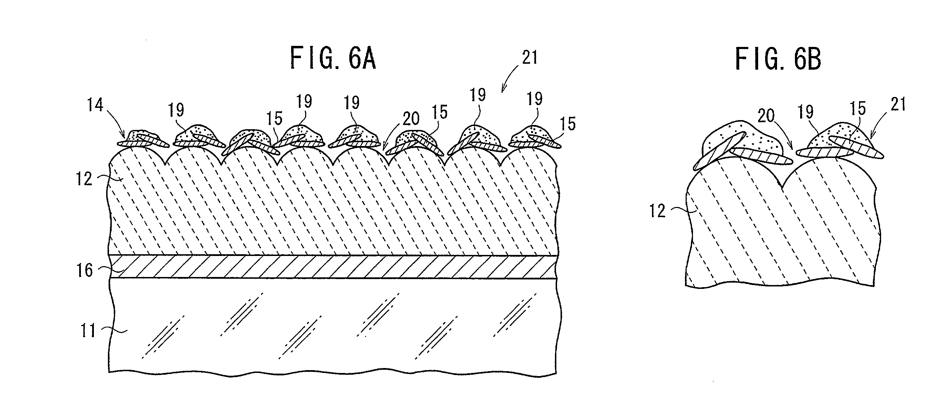

As shown in FIGS. 5A and 5B, the upper electrode 14 may preferably be in the form of a cluster 17 of a plurality of scale-like substances 15 (e.g., of graphite). Alternatively, as shown in FIGS. 6A and 6B, the upper electrode 14 may preferably be in the form of a cluster 21 of electrically conductive substances 19 including scale-like substances 15. The cluster 17 or 21 does not fully cover the surface of the emitter section 12, but a plurality of through regions 20 are provided through which the emitter section 12 is partly exposed, and those portions of the emitter section 12 which face the through regions 20 serve as electron emission regions.

Electrically conductive material such as metal is used for the upper electrode 14. The upper electrode 14 may be made of any of the above materials by any of thick-film forming processes including screen printing, spray coating, coating, dipping, electrophoresis, etc., or any of various thin-film forming processes including sputtering, an ion beam process, vacuum evaporation, ion plating, chemical vapor deposition (CVD), plating, etc. Preferably, the upper electrode 14 is made by any of the above thick-film forming processes.

The lower electrode 16 is made of platinum, molybdenum, tungsten, or the like. Alternatively, the lower electrode 16 is made of an electric conductor which is resistant to a high-temperature oxidizing atmosphere, e.g., a metal, an alloy, a mixture of insulative ceramics and a metal, a mixture of insulative ceramics and an alloy, or the like. Preferably, the lower electrode 16 should be made of a precious metal having a high melting point such as platinum, iridium, palladium, rhodium, molybdenum, or the like, or a material chiefly composed of an alloy of silver and palladium, silver and platinum, platinum and palladium, or the like, or a cermet of platinum and ceramics. Further preferably, the lower electrode 16 should be made of platinum only or a material chiefly composed of a platinum-base alloy.

The lower electrode 16 may be made of carbon or a graphite-base material. Ceramics to be added to the electrode material should preferably have a proportion ranging from 5 to 30 volume %. The lower electrode 16 may be made of the same material as the upper electrode, as described above.

The lower electrode 16 should preferably be formed by any of various thick-film forming processes. The lower electrode 16 has a thickness of 20 μm or less or preferably a thickness of 5 μm or less.

As the firing process of the electron emitter 10A, for example, the material of the lower electrode 16, the material of the emitter section 12, and the material of the upper electrode 14 may successively be stacked on the glass substrate 11, and then fired into an integral structure as the electron emitter 10A. Alternatively, each time the lower electrode 16, the emitter section 12, or the upper electrode 14 is formed, the assembly may be heated (fired) into a structure integral with the glass substrate 11. Depending on how the upper electrode 14 and the lower electrode 16 are formed, however, the heating (firing) process for producing an integral structure may not be required.

In consideration of the softening point of the glass substrate 11, the firing process for integrally combining the emitter section 12, the upper electrode 14, and the lower electrode 16 on the glass substrate 11 may be carried out at a temperature ranging from 500 to 1000°c, preferably from 600 to 800°C. For heating the emitter section 12 which is in the form of a film, the emitter section 12 should preferably be fired together with its evaporation source while their atmosphere is being controlled, so that the composition of the emitter section 12 will not become unstable at high temperature.

As a film forming method on the glass substrate, the process and the material are selected such that the lower electrode 16, the emitter section 12, and the upper electrode 14 are formed successively on the glass substrate 11 at a temperature not greater than the softening point of the glass substrate 11. Specifically, the lower electrode 16 is formed by screen printing using silver paste or the like which can be fired at a low temperature. After the lower electrode 16 is fired, the emitter section 12 is formed by the aerosol deposition. Alternatively, the emitter section 12 is formed by the process of impregnating a powdery piezoelectric/electrostrictive material with glass of a low melting point or sol particles. Then, the upper electrode 14 is formed on the emitter section 12 by screen printing or the like using material which can be fired at a low temperature.

In another film forming process, the emitter section 12 is formed by gluing a sheet formed at a temperature not greater than the softening point of the glass substrate 11 on the glass substrate 11. In the process, since the emitter section 12 is formed without any constraints of the firing temperature, the necessary characteristics for electron emission can be achieved easily.

By performing the sintering process, the film which will serve as the upper electrode 14 is shrunk from the thickness of 10 μm to the thickness of 0.1 μm, and simultaneously a plurality of holes are formed therein. As a result, as shown in FIG. 2, a plurality of through regions 20 are formed in the upper electrode 14, and the peripheral portions 26 of the through regions 20 are turned into overhanging portions. In advance (of the firing process), the film which will serve as the upper electrode 14 may be patterned by etching (wet etching or dry etching) or lift-off, and then may be fired. In this case, recesses or slits may easily be formed as the through regions 20.

The emitter section 12 may be covered with a suitable member, and then fired such that the surface of the emitter section 12 will not be exposed directly to the firing atmosphere.

The principles of electron emission of the electron emitter 10A will be described below. First, a drive voltage Va is applied between the upper electrode 14 and the lower electrode 16. The drive voltage Va is defined as a voltage, such as a pulse voltage or an alternating-current voltage, which abruptly changes, with time, from a voltage level higher or lower than a reference voltage (e.g., 0 V) to a voltage level that is lower or higher than the reference voltage.

A triple junction is formed in a region of contact between the upper surface of the emitter section 12, the upper electrode 14, and a medium (e.g., a vacuum) around the electron emitter 10A. The triple junction is defined as an electric field concentration region formed by a contact between the upper electrode 14, the emitter section 12, and the vacuum. The triple junction includes a triple point where the upper electrode 14, the emitter section 12, and the vacuum exist as one point. The vacuum level in the atmosphere should preferably in the range from $10^2$ to $10^{-6}$ Pa and more preferably in the range from $10^{-3}$ to $10^{-5}$ Pa.

In the first embodiment, the triple junction is formed on the overhanging portion 26 of the upper electrode 14 and the peripheral area of the upper electrode 14. Therefore, when the drive voltage Va is applied between the upper electrode 14 and the lower electrode 16, an electric field concentration occurs at the triple junction.

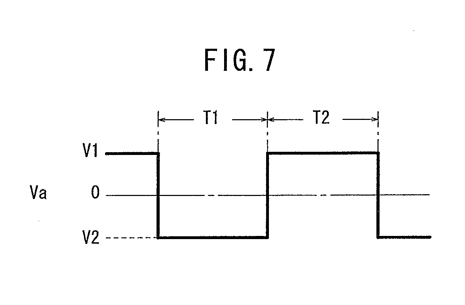

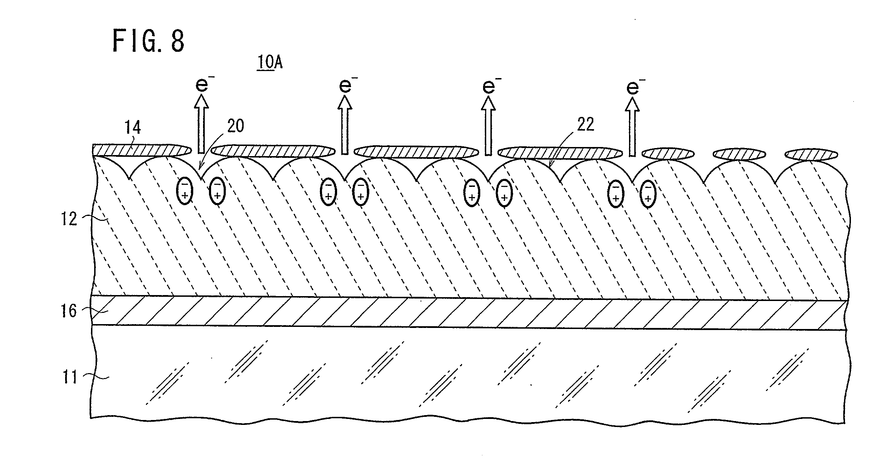

A first electron emission process will first be described below with reference to FIGS. 7 and 8. In a first output period T1 (first stage) shown in FIG. 7, a voltage V2 lower than a reference voltage (e.g., 0 V) is applied to the upper electrode 14, and a voltage V1 higher than the reference voltage is applied to the lower electrode 16. In the first output period T1, an electric field concentration occurs at the triple junction and/or the tip of the upper electrode 14 to emit electrons from the upper electrode 14 to the emitter section 12, accumulating electrons in the portions of the emitter section 12 which are exposed through the through regions 20 of the upper electrode 14 and regions near the peripheral portion of the upper electrode 14. That is, the electrons are charged in the emitter section 12. At this time, the upper electrode 14 functions as an electron supply source.

In a next output period T2 (second stage), the voltage level of the drive voltage Va abruptly changes, i.e., the voltage V1 higher than the reference voltage is applied to the upper electrode 14 and the voltage V2 lower than the reference voltage is applied to the lower electrode 16. The electrons that have been accumulated in the portions of the emitter 12 which are exposed through the through region 20 of the upper electrode 14 and the regions near the outer peripheral portion of the upper electrode 14 are expelled from the emitter section 12 by dipoles (whose negative poles appear on the surface of the emitter section 12) in the emitter section 12 whose polarization has been reversed in the opposite direction. As shown in FIG. 8, the electrons are emitted from the portions of the emitter section 12 where the electrons have been accumulated, through the through regions 20. The electrons are also emitted from the regions near the outer peripheral portion of the upper electrode 14.

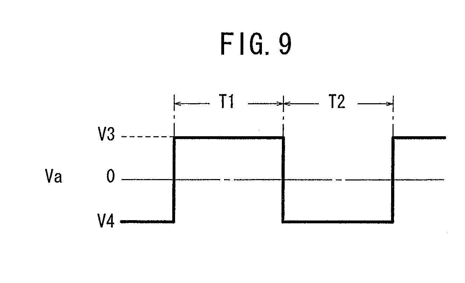

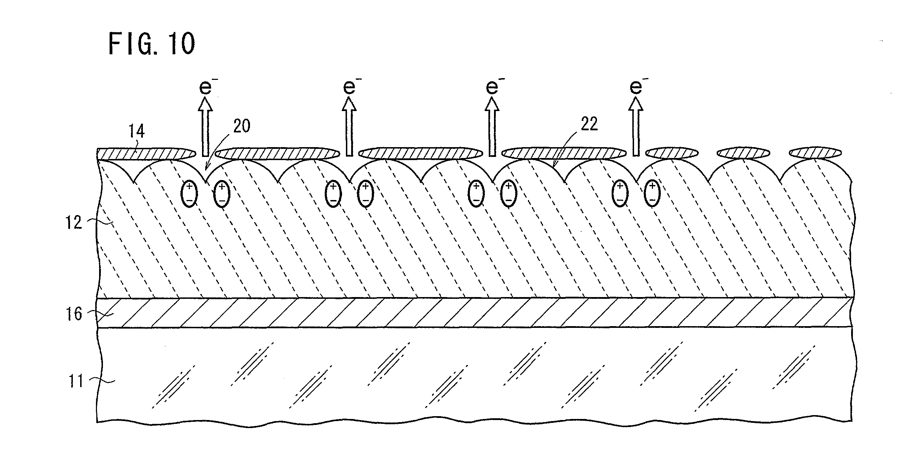

Next, a second electron emission process will be described below. In a first output period T1 (first stage) shown in FIG. 9, a voltage V3 higher than a reference voltage is applied to the upper electrode 14, and a voltage V4 lower than the reference voltage is applied to the lower electrode 16. In the first output period T1, the electron emitter is prepared for electron emission (e. g., the emitter section 12 is polarized in one direction). In a next second output period T2 (second stage), the voltage level of a drive voltage Va is quickly changed, i. e., the voltage V4 lower than the reference voltage is applied to the upper electrode 14, and the voltage V3 higher than the reference voltage is applied to the lower electrode 16. Now, an electric field concentration occurs at the triple junction referred to above, causing the upper electrode 14 to emit primary electrons, which impinge upon the portions of the emitter section 12 which are exposed through the through region 20 and the regions near the outer peripheral portion of the upper electrode 14. As shown in FIG. 10, secondary electrons (including reflected primary electrons) are emitted from the portions hit by the primary electrons. Thus, secondary electrons are emitted from the through region 20 and the regions near the outer peripheral portion of the upper electrode 14 in an initial stage of the second output period T2.

In the electron emitter 10A according to the first embodiment, since the upper electrode 14 has the through regions 20, electrons are uniformly emitted from each of the through regions 20 and the outer peripheral portions of the upper electrode 14. Thus, variations in the overall electron emission characteristics of the electron emitter section 12 are reduced, making it possible to facilitate the control of the electron emission and increase the electron emission efficiency.

According to the first embodiment, furthermore, because the gap 28 is formed between the overhanging portion 26 of the upper electrode 14 and the emitter section 12, when the drive voltage Va is applied, an electric field concentration tends to be produced in the region of the gap 28. This leads to a higher efficiency of the electron emission, making the drive voltage lower (emitting electrons at a lower voltage level).

As described above, in the first embodiment, since the upper electrode 12 has the overhanging portion 26 on the peripheral portion of the through region 20, together with the increased electric field concentration in the region of the gap 28, electrons are easily emitted from the overhanging portion 26 of the upper electrode 14. This leads to a larger output and higher efficiency of the electron emission, making the drive voltage Va lower. Thus, for example, high luminance is achieved in a display, a light source or the like including an array made up of a lot of the electron emitters 10A. In either one of the first electron emission process (the process of emitting electrons accumulated in the emitter section 12) and the second electron emission process (the process of emitting secondary electrons by causing primary electrons from the upper electrode 14 to impinge upon the emitter section 12), as the overhanging portion 16 of the upper electrode 14 functions as a gate electrode (a control electrode, a focusing electronic lens, or the like), the straightness of emitted electrons can be increased. This is effective in reducing crosstalk in an electron source of a display using the electron emitters 10A.

As described above, the electron emitter 10A according to the first embodiment is capable of easily developing a high electric field concentration, provides many electron emission regions, has a larger output and higher efficiency of the electron emission, and can be driven at a lower voltage (lower power consumption).

With the first embodiment in particular, at least the upper surface of the emitter section 12 has the surface irregularities 22 due to the grain boundary of the dielectric material. As the upper electrode 12 has the through regions 20 in portions corresponding to the concavities 24 of the grain boundary of the dielectric material, the overhanging portions 26 of the upper electrode 14 can easily be realized.

The maximum angle $\theta$ between the upper surface of the emitter section 12, i.e., the surface of the convexity 30 (which is also the inner wall surface of the concavity 24) of the grain boundary of the dielectric material, and the lower surface 26a of the overhanging portion 26 of the upper electrode 14 is in the range of $1° \leq \theta \leq 60°$. The maximum distance d in the vertical direction between the surface of the convexity 30 (the inner wall surface of the concavity 24) of the grain boundary of the dielectric material and the lower surface 26a of the overhanging portion 26 of the upper electrode 14 is in the range of $0 \ \mu m < d \leq 10 \ \mu m$. These arrangements make it possible to increase the degree of the electric field concentration in the region of the gap 28, resulting in a larger output and higher efficiency of the electron emission and making the drive voltage lower efficiently.

According to the first embodiment, the through region 20 is in the shape of the hole 32. As shown in FIG. 3, the portions of the emitter section 12 where the polarization is reversed or changed depending on the drive voltage Va applied between the upper electrode 14 and the lower electrode 16 (see FIG. 2) include a portion (first portion) 40 directly below the upper electrode 14 and a portion (second portion) 42 corresponding to a region extending from the inner peripheral edge of the through region 20 inwardly of the through region 20. Particularly, the second portion 42 changes depending on the level of the drive voltage Va and the degree of the electric field concentration. According to the first embodiment, the average diameter of the hole 32 is in the range from 0.1 μm to 10 μm. Insofar as the average diameter of the hole 32 is in this range, the distribution of electrons emitted through the through region 20 is almost free of any variations, allowing electrons to be emitted efficiently.

If the average diameter of the hole 32 is less than 0.1 μm, then the region where electrons are accumulated is made narrower, reducing the amount of emitted electrons. While one solution would be to form many holes 32, it would be difficult and highly costly to form many holes 32. If the average diameter of the hole 32 is in excess of 10 μm, then the proportion (share) of the portion (second portion) 42 which contributes to the emission of electrons in the portion of the emitter section 12 that is exposed through the through region 20 is reduced, resulting in a reduction in the electron emission efficiency.

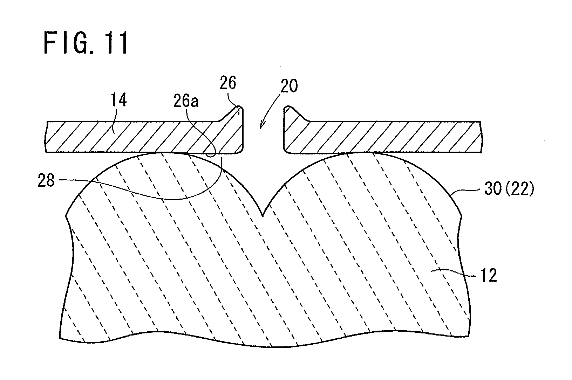

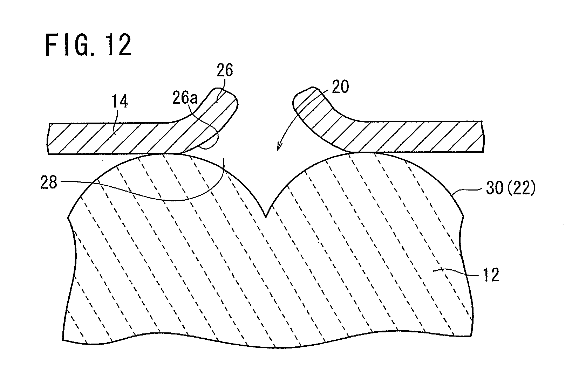

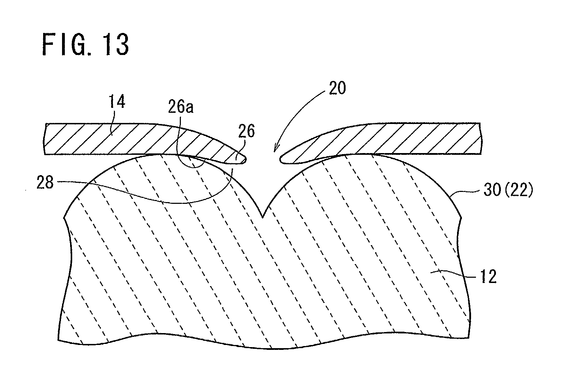

The overhanging portion 26 of the upper electrode 14 may have upper and lower surfaces extending horizontally as shown in FIG. 3. Alternatively, as shown in FIG. 11, the overhanging portion 26 may have a lower surface 26a extending substantially horizontally and an upper end raised upwardly. Alternatively, as shown in FIG. 12, the overhanging portion 26 may have a lower surface 26a inclined progressively upwardly toward the center of the through region 20. Further alternatively, as shown in FIG. 13, the overhanging portion 26 may have a lower surface 26a inclined progressively downwardly toward the center of the through region 20. The arrangement shown in FIG. 11 is capable of increasing the function as a gate electrode. The arrangement shown in FIG. 13 makes it easier to produce a higher electric field concentration for a larger output and higher efficiency of the electron emission because the gap 28 is narrower.

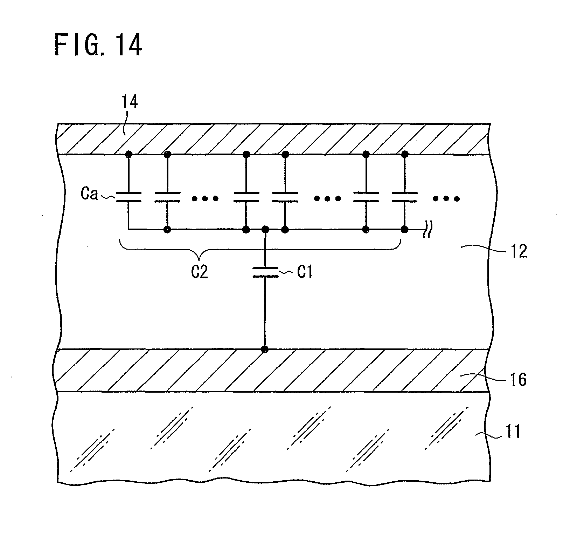

In the first embodiment of the present invention, as shown in FIG. 14, the electron emitter has in its electrical operation a capacitor C1 due to the emitter section 12 and a cluster of capacitors Ca due to respective gaps 28, disposed between the upper electrode 14 and the lower electrode 16. The capacitors Ca due to the respective gaps 28 are connected parallel to each other into a single capacitor C2. In terms of an equivalent circuit, the capacitor C1 due to the emitter section 12 is connected in series to the capacitor C2 which comprises the cluster of capacitors Ca.

Actually, the capacitor C1 due to the emitter section 12 is not directly connected in series to the capacitor C2 which comprises the cluster of capacitors Ca, but the capacitive component that is connected in series varies depending on the number of the through regions 20 formed in the upper electrode 14 and the overall area of the through regions 20.

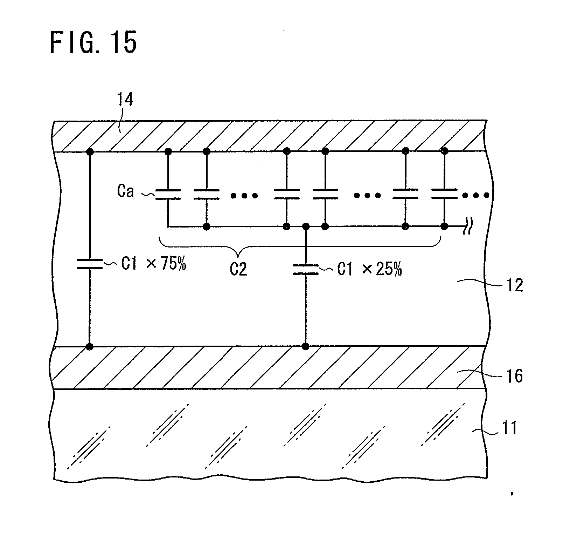

Capacitance calculations will be performed on the assumption that 25 % of the capacitor C1 due to the emitter section 12 is connected in series to the capacitor C2 which comprises the cluster of capacitors Ca, as shown in FIG. 15. Since the gaps 28 are in vacuum, the relative dielectric constant is 1. It is assumed that the maximum distance d of the gaps 28 is 0.1 μm, the area S of each gap 28 is $S = 1\,\mu m \times 1\,\mu m$, and the number of the gaps 28 is 10,000. It is also assumed that the emitter section 12 has a relative dielectric constant of 2000, the emitter section 12 has a thickness of 20 μm, and the confronting area of the upper and lower electrodes 14, 16 is $200\,\mu m \times 200\,\mu m$. The capacitor C2 which comprises the cluster of capacitors Ca has a capacitance of 0.885 pF, and the capacitor C1 due to the emitter section 12 has a capacitance of 35.4 pF. If the portion of the capacitor C1 due to the emitter section 12 which is connected in series to the capacitor C2 which comprises the cluster of capacitors Ca is 25 % of the entire capacitor C1, then that series-connected portion has a capacitance (including the capacitance of capacitor C2 which comprises the cluster of capacitors Ca) of 0.805 pF, and the remaining portion has a capacitance of 26.6 pF.

Because the series-connected portion and the remaining portion are connected parallel to each other, the overall capacitance is 27.5 pF. This capacitance is 78 % of the capacitance 35.4 pF of the capacitor C1 due to the emitter section 12. Therefore, the overall capacitance is smaller than the capacitance of the capacitor C1 due to the emitter section 12.

Consequently, the capacitance of the cluster of capacitors Ca due to the gaps 28 is relatively small. Because of the voltage division between the cluster of capacitors Ca and the capacitor C1 due to the emitter section 12, almost the entire voltage Va is applied across the gaps 28, which are effective to produce a larger output of the electron emission.

Since the capacitor C2 which comprises the cluster of capacitors Ca is connected in series to the capacitor C1 due to the emitter section 12, the overall capacitance is smaller than the capacitance of the capacitor C1 due to the emitter section 12. This is effective to provide such preferred characteristics that the electron emission is performed for a larger output and the overall power consumption is lower.

In the electron emitter 10A according to the first embodiment, since the glass substrate 11 is employed, it is possible to produce a large panel, and reduce the production cost. Further, it is possible to lower the process temperature for producing the electron emitter 10A, and lower the cost for facilities. Crystallized glass may be used for the glass substrate 11. In this case, unlike the normal glass, since the process temperature is in a range from 600 to 800°c, selection of the material can be carried out freely.

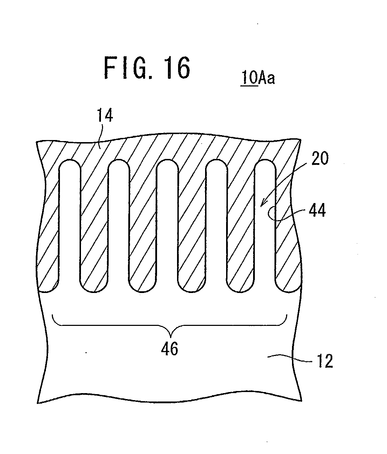

Next, three modifications of the electron emitter 10A described above will be described below with reference to FIGS. 16 through 18.

As shown in FIG. 16, an electron emitter 10Aa according to a first modification differs from the above electron emitter 10A in that the through region 20 has a shape, particularly a shape viewed from above, in the form of a recess 44. As shown in FIG. 16, the recess 44 should preferably be shaped such that a number of recesses 44 are successively formed into a comb-toothed recess 46. The comb-toothed recess 46 is effective to reduce variations in the distribution of electrons emitted through the through region 20 for efficient electron emission. Particularly, it is preferable to have the average width of the recesses 44 in the range from 0.1 μm to 10 μm. The average width represents the average of the lengths of a plurality of different line segments extending perpendicularly across the central line of the recess 44.

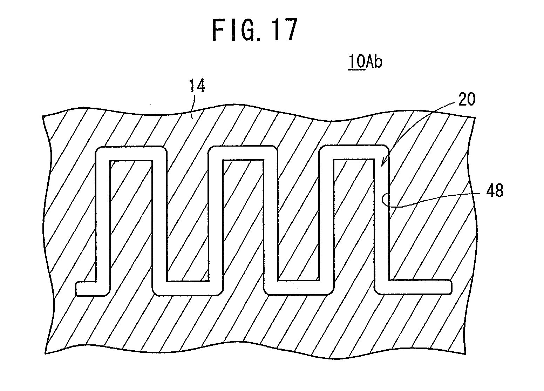

As shown in FIG. 17, an electron emitter 10Ab according to a second modification differs from the above electron emitter 10A in that the through region 20 has a shape, particularly a shape viewed from above, in the form of a slit 48. The slit 48 is defined as something having a major axis (extending in a longitudinal direction) whose length is 10 times or more the length of the minor axis (extending in a transverse direction) thereof. Those having a major axis (extending in a longitudinal direction) whose length is less than 10 times the length of the minor axis (extending in a transverse direction) thereof are defined as holes 32 (see FIG. 4). The slit 48 includes a succession of holes 32 in communication with each other. The slit 48 should preferably have an average width ranging from 0.1 μm to 10 μm for reducing variations in the distribution of electrons emitted through the through region 20 for efficient electron emission. The average width represents the average of the lengths of a plurality of different line segments extending perpendicularly across the central line of the slit 48.

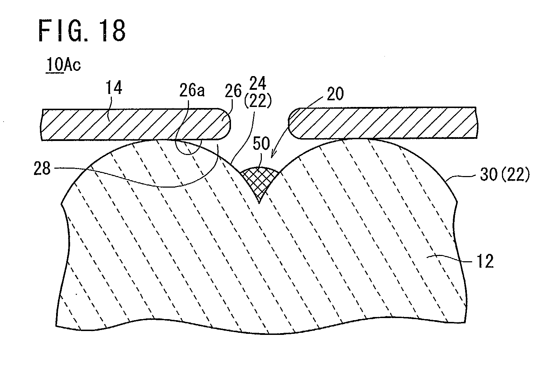

As shown in FIG. 18, an electron emitter 10Ac according to a third modification differs from the above electron emitter 10A in that a floating electrode 50 exists on the portion of the upper surface of the emitter section 12 which corresponds to the through region 20, e.g., in the concavity 24 due to the grain boundary of the dielectric material. With this arrangement, since the floating electrode 50 also serves as an electron supply source, a number of electrons can be emitted out through the through region 20 in the electron emission stage (second stage). The electron emission from the floating electrode 50 may be attributed to an electric field concentration at the triple junction of the floating electrode 50, the dielectric material, and the vacuum.

The characteristics of the electron emitter 10A according to the first embodiment, particularly, the voltage vs. charge quantity characteristics (voltage vs. polarized quantity characteristics), will be described below.

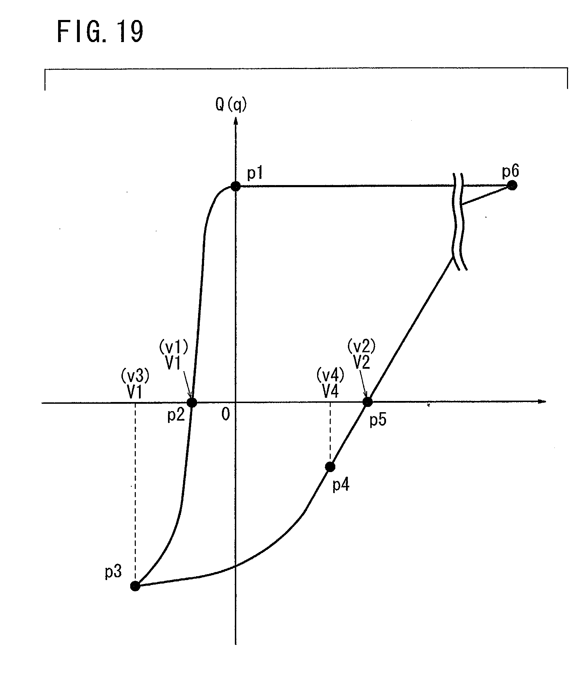

The electron emitter 10A according to the first embodiment is characterized by an asymmetric hysteresis curve based on the reference voltage = 0 (V) in vacuum, as indicated by the characteristics shown in FIG. 19.

The voltage vs. charge quantity characteristics will be described below. If a region from which electrons are emitted is defined as an electron emission region, then at a point p1 (initial state) where the reference voltage is applied, almost no electrons are stored in the electron emission region. Thereafter, when a negative voltage is applied, the amount of positive charges of dipoles whose polarization is reversed in the emitter section 12 in the electron emission region increases, and electrons are emitted from the upper electrode 14 toward the electron emission region in the first stage, so that electrons are stored. When the level of the negative voltage decreases in a negative direction, electrons are progressively stored in the electron emission region until the amount of positive charges and the amount of electrons are held in equilibrium with each other at a point p2 of the negative voltage. As the level of the negative voltage further decreases in the negative direction, the stored amount of electrons increases, making the amount of negative charges greater than the amount of positive charges. The accumulation of electrons is saturated at a point P3. The amount of negative charges is the sum of the amount of electrons remaining to be stored and the amount of negative charges of the dipoles whose polarization is reversed in the emitter section 12.

As the level of the negative voltage further decreases, and a positive voltage is applied in excess of the reference voltage, electrons start being emitted at a point p4 in the second stage. When the positive voltage increases in a positive direction, the amount of emitted electrons increases until the amount of positive charges and the amount of electrons are held in equilibrium with each other at a point p5. At a point p6, almost all the stored electrons are emitted, bringing the difference between the amount of positive charges and the amount of negative charges into substantial conformity with a value in the initial state. That is, almost all stored electrons are eliminated, and only the negative charges of dipoles whose polarization is reversed in the emitter section 12 appear in the electron emission region.

The characteristics have the following features:

(1) If the negative voltage at the point p2 where the amount of positive charges and the amount of electrons are held in equilibrium with each other is represented by V1 and the positive voltage at the point p5 by V2, then these voltages satisfy the following

relationship:

$$|V1| < |V2|$$

(2) More specifically, the relationship is expressed as $1.5 \times |V1| < |V2|$

(3) If the rate of change of the amount of positive charges and the amount of electrons at the point p2 is represented by $\Delta Q1/\Delta V1$ and the rate of change of the amount of positive charges and the amount of electrons at the point p5 by $\Delta Q2/\Delta V2$, then these rates satisfy the following relationship:

$$(\Delta Q1/\Delta V1) > (\Delta Q2/\Delta V2)$$

(4) If the voltage at which the accumulation of electrons is saturated is represented by V3 and the voltage at which electrons start being emitted by V4, then these voltages satisfy the following relationship:

$$1 \leq |V4|/|V3| \leq 1.5$$

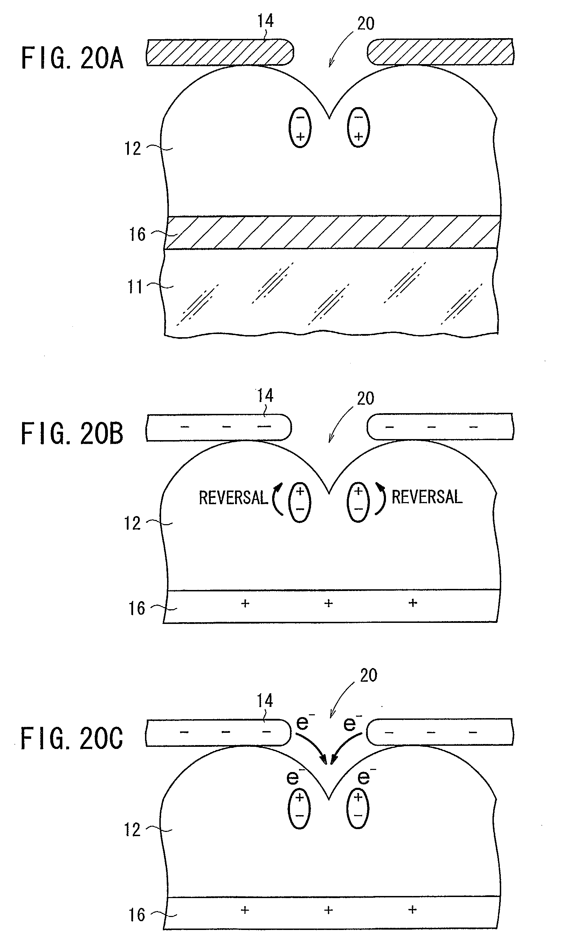

The characteristics shown in FIG. 19 will be described below in terms of the voltage vs. charge quantity characteristics. In the following description, it is assumed that the emitter section 12 is polarized in one direction, with dipoles having negative poles facing toward the upper surface of the emitter section 12 in the initial state (see FIG. 20A).

At the point p1 (initial state) where the reference voltage (e.g., 0 V) is applied as shown in FIG. 19, since the negative poles of the dipole moments face toward the upper surface of the emitter section 12, as shown in FIG. 20A, almost no electrons are accumulated on the upper surface of the emitter section 12.

Thereafter, when a negative voltage is applied and the level of the negative voltage is increased in the negative direction, the polarization starts being reversed substantially at the time the negative voltage exceeds a negative coercive voltage (see the point p2 in FIG. 19). All the polarization is reversed at the point p3 shown in FIG. 19 (see FIG. 20B). Because of the polarization reversal, an electric field concentration occurs at the triple junction and/or the tip of the upper electrode 14, and electrons are emitted from the upper electrode 14 to the emitter section 12 in the first stage, causing electrons to be accumulated in the portion of the emitter section 12 which is exposed through the through region 20 of the upper electrode 14 and the portion of the emitter section 12 which is near the peripheral portion of the upper electrode 14 (see FIG. 20C). In particular, electrons are emitted (emitted inwardly) from the upper electrode 14 toward the portion of the emitter section 12 which is exposed through the through region 20 of the upper electrode 14. At the point p3 shown in FIG. 19, the accumulation of electrons is saturated.

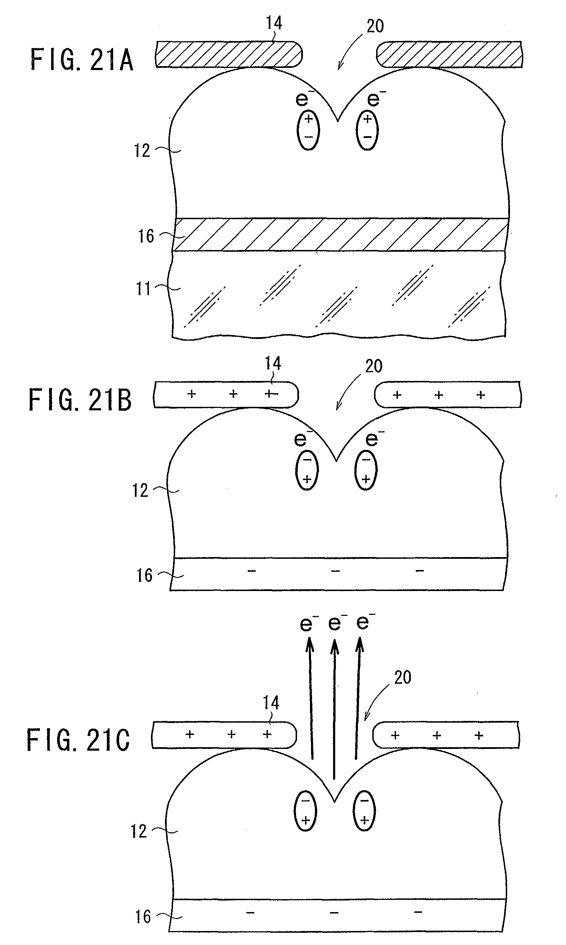

Thereafter, when the level of the negative voltage is reduced and a positive voltage is applied in excess of the reference voltage, the upper surface of the emitter section 12 is kept charged up to a certain voltage level (see FIG. 21A). As the level of the positive voltage is increased, there is produced a region where the negative poles of dipole moments start facing the upper surface of the emitter section 12 (see FIG. 21B) immediately prior to the point p4 in FIG. 19. When the level is further increased, electrons start being emitted due to coulomb repulsive forces posed by the negative poles of the dipoles after the point p4 in FIG. 19 (see FIG. 21C). When the positive voltage is increased in the positive direction, the amount of emitted electrons is increased. Substantially at the time the positive voltage exceeds the positive coercive voltage (the point p5), a region where the polarization is reversed again is increased. At the point p6, almost all the accumulated electrons are emitted, and the amount of polarization at this time is essentially the same as the amount of polarization in the initial state.

The characteristics of the electron emitter 10A have the following features:

(A) If the negative coercive voltage is represented by v1 and the positive coercive voltage by v2, then

$$|v1| < |v2|$$

(B) More specifically, $1.5 \times |v1| < |v2|$

(C) If the rate of change of the polarization at the time the negative coercive voltage v1 is applied is represented by $\Delta q1/\Delta v1$ and the rate of change of the amount of positive charges and the rate of change of the polarization at the time the positive coercive voltage v2 is applied is represented by $\Delta q2/\Delta v2$, then

$$(\Delta q1/\Delta v1) > (\Delta q2/\Delta v2)$$

(D) If the voltage at which the accumulation of electrons is saturated is represented by v3 and the voltage at which electrons start being emitted by v4, then

$$1 \leq |v4|/|v3| \leq 1.5$$

Since the electron emitter 10A according to the first embodiment has the above characteristics, it can easily be applied to a light source for emitting light from phosphors or a display for displaying an image by emitting electrons from a plurality of electron emitters 10A arrayed in association with respective pixels.

A display or a light source (hereinafter referred to as the display 100) using the electron emitters 10A according to the first embodiment will be described below. In the following description, an element of the display will be referred to as the "pixel", and an element of the light source will be referred as the "light-emission element".

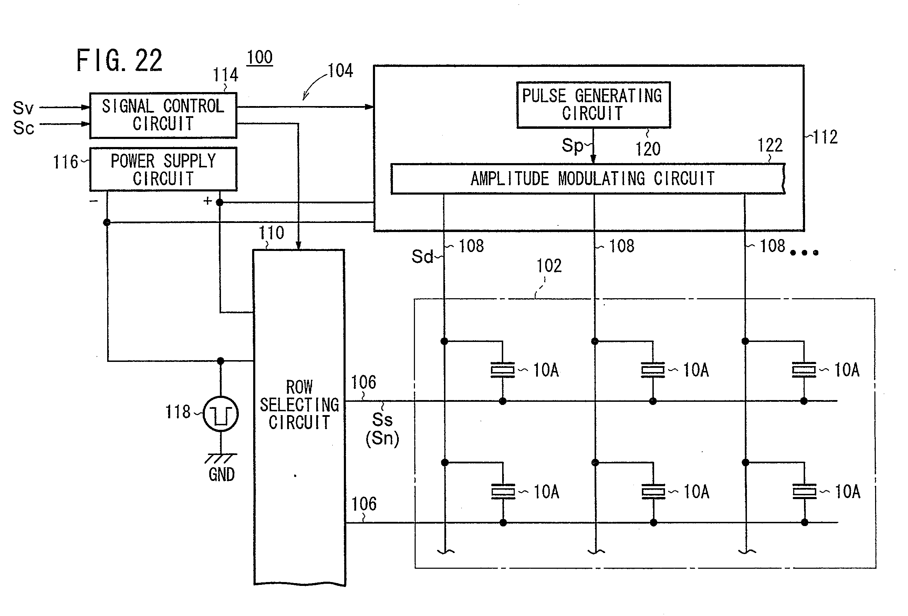

As shown in FIG. 22, the display 100 has an electron emission device (light-emission display unit) 102 according to the embodiment of the present invention. The light-emission display unit 102 includes a matrix or staggered pattern made up of a large number of electron emitters 10A corresponding to respective pixels, and a drive circuit 104 for driving the light-emission display unit 102. One electron emitter 10A may be assigned to each pixel (light-emission element), or a plurality of electron emitters 10A may be assigned to each pixel (light-emission element). In the present embodiment, it is assumed for the sake of brevity that one electron emitter 10A is assigned to each pixel (light-emission element).

The drive circuit 104 has a plurality of row select lines 106 for selecting rows in the light-emission display unit 102 and a plurality of signal lines 108 for supplying data signals Sd to the light-emission display unit 102.

The drive circuit 104 also has a row selecting circuit 110 for supplying a selection signal Ss selectively to the row select lines 106 to successively select a row of electron emitters 10A, a signal supplying circuit 112 for outputting parallel data signals Sd to the signal lines 108 to supply the data signals Sd to a row (selected row) selected by the row selecting circuit 110, and a signal control circuit 114 for controlling the row selecting circuit 110 and the signal supplying circuit 112 based on a video signal Sv and a synchronizing signal Sc that are input to the signal control circuit 114.

A power supply circuit 116 (which supplies 50 V and 0 V, for example) is connected to the row selecting circuit 110 and the signal supplying circuit 112. A pulse power supply 118 is connected between a negative line between the row selecting circuit 110 and the power supply circuit 116, and GND (ground). The pulse power supply 118 outputs a pulsed voltage waveform having a reference voltage (e.g., 0 V) during a charge accumulation period Td, to be described later, and a certain voltage (e.g., - 400 V) during a light emission period Th.

During the charge accumulation period Td, the row selecting circuit 110 outputs the selection signal Ss to the selected row and outputs a non-selection signal Sn to the unselected rows. During the light emission period Th, the row selecting circuit 110 outputs a constant voltage (e.g., - 350 V) which is the sum of a power supply voltage (e.g., 50 V) from the power supply circuit 116 and a voltage (e.g., - 400 V) from the pulse power supply 118.

The signal supplying circuit 112 has a pulse generating circuit 120 and an amplitude modulating circuit 122. The pulse generating circuit 120 generates a pulse signal Sp having a constant pulse period and a constant amplitude (e.g., 50 V) during the charge accumulation period Td, and outputs a reference voltage (e.g., 0 V) during the light emission period Th.

During the charge accumulation period Td, the amplitude modulating circuit 122 amplitude-modulates the pulse signal Sp from the pulse generating circuit 120 depending on the luminance levels of the pixels (light-emission elements) of the selected row, and outputs the amplitude-modulated pulse signal Sp as the data signal Sd for the pixels (light-emission elements) of the selected row. During the light emission period Th, the amplitude modulating circuit 122 outputs the reference voltage from the pulse generating circuit 120 as it is. The timing control in the amplitude modulating circuit 122 and the supply of the luminance levels of the selected pixels (light-emission elements) to the amplitude modulating circuit 122 are performed by the signal control circuit 114.

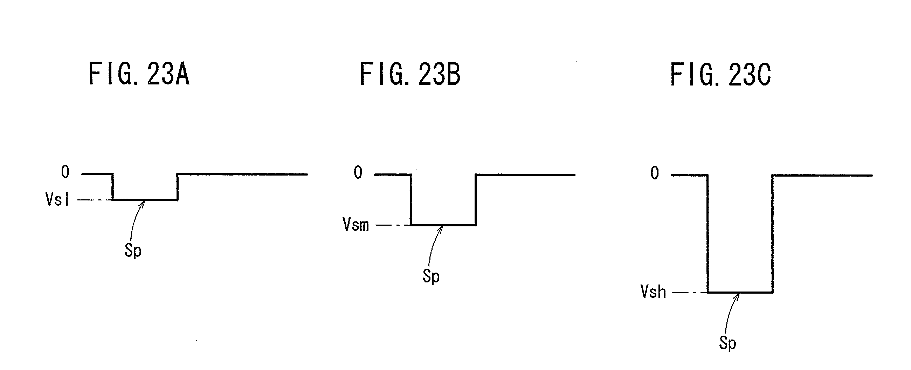

For example, as indicated by three examples shown in FIGS. 23A through 23C, if the luminance level is low, then the amplitude of the pulse signal Sp is set to a low level Vsl (see FIG. 23A), if the luminance level is medium, then the amplitude of the pulse signal Sp is set to a medium level Vsm (see FIG. 23B), and if the luminance level is high, then the amplitude of the pulse signal Sp is set to a high level Vsh (see FIG. 23C). Though the amplitude of the pulse signal Sp is modulated into three levels in the above examples, if the amplitude modulation is applied to the display 100, then the pulse signal Sp is amplitude-modulated to 128 levels or 256 levels depending on the luminance levels of the pixels (light-emission elements).

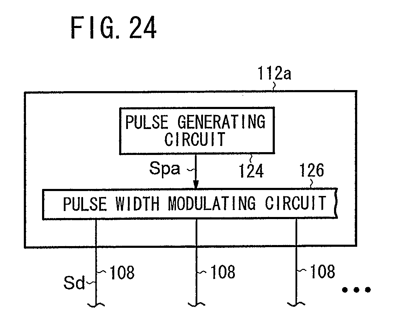

A modification of the signal supplying circuit 112 will be described below with reference to FIGS. 24 through 25C.

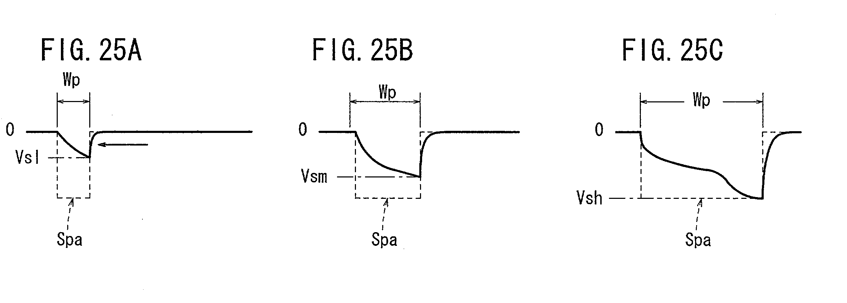

As shown in FIG. 24, a modified signal supplying circuit 112a has a pulse generating circuit 124 and a pulse width modulating circuit 126. The pulse generating circuit 124 generates and outputs a pulse signal Spa (indicated by the broken lines in FIGS. 25A through 25C) where the positive-going edge of a voltage waveform (indicated by the solid lines in FIGS. 25A through 25C) applied to the electron emitter 10A is continuously changed in level, during the charge accumulation period Td. The pulse generating circuit 124 outputs a reference voltage during the light emission period Th. During the charge accumulation period Td, the pulse width modulating circuit 126 modulates the pulse width Wp (see FIGS. 25A through 25C) of the pulse signal Spa from the pulse generating circuit 124 depending on the luminance levels of the pixels (light-emission elements) of the selected row, and outputs the pulse signal Spa with the modulated pulse width Wp as the data signal Sd for the pixels (light-emission signal) of the selected row.

During the light emission period Th, the pulse width modulating circuit 126 outputs the reference voltage from the pulse generating circuit 124 as it is. The timing control in the pulse width modulating circuit 126 and the supply of the luminance levels of the selected pixels (light-emission elements) to the pulse with modulating circuit 126 are also performed by the signal control circuit 114.

For example, as indicated by three examples shown in FIGS. 25A through 25C, if the luminance level is low, then the pulse width p of the pulse signal Spa is set to a short width, setting the substantial amplitude to a low level Vsl (see FIG. 25A), if the luminance level is medium, then the pulse width Wp of the pulse signal Spa is set to a medium width, setting the substantial amplitude to a medium level Vsm (see FIG. 25B), and if the luminance level is high, then the pulse width Wp of the pulse signal Spa is set to a long width, setting the substantial amplitude to a high level Vsh (see FIG. 25C). Though the pulse width Wp of the pulse signal Spa is modulated into three levels in the above examples, if the amplitude modulation is applied to the display 100, then the pulse signal Spa is pulse-width-modulated to 128 levels or 256 levels depending on the luminance levels of the pixels (light-emission elements).

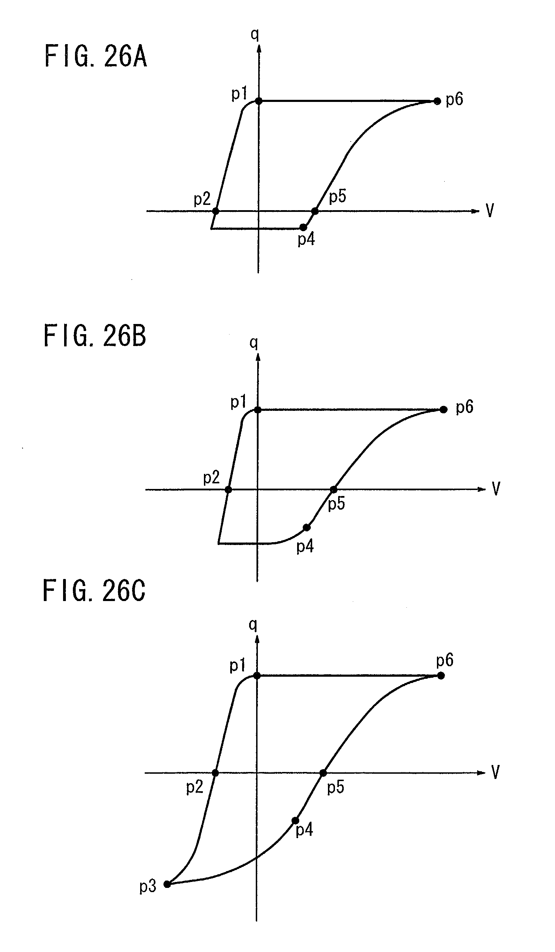

Changes of the characteristics at the time the level of the negative voltage for the accumulation of electrons will be reviewed in relation to the three examples of amplitude modulation on the pulse signal Sp shown in FIGS. 23A through 23C and the three examples of pulse width modulation on the pulse signal Spa shown in FIGS. 25A through 25C. At the level Vsl of the negative voltage shown in FIGS. 23A and 25A, the amount of electrons accumulated in the electron emitter section 12 is small as shown in FIG. 26A. At the level Vsm of the negative voltage shown in FIGS. 23B and 25B, the amount of electrons accumulated in the electron emitter section 12 is medium as shown in FIG. 26B. At the level Vsh of the negative voltage shown in FIGS. 23C and 25C, the amount of electrons accumulated in the electron emitter section 12 is large and is substantially saturated as shown in FIG. 26C.

However, as shown in FIGS. 26A through 26C, the voltage level at the point p4 where electrons start being emitted is substantially the same. That is, even if the applied voltage changes to the voltage level indicated at the point p4 after electrons are accumulated, the amount of accumulated electrons does not change essentially. It can thus be seen that a memory effect has been produced.

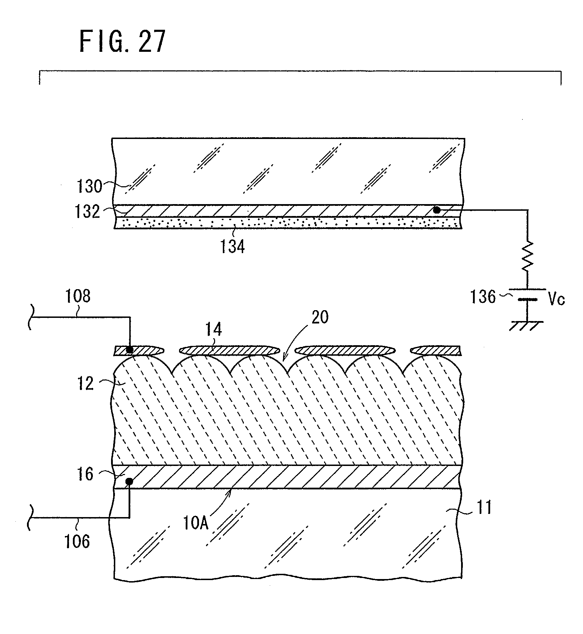

For using the electron emitter 10A as a pixel (light-emission element) of the display 100, as shown in FIG. 27, a transparent plate 130 made of glass or acrylic resin is placed above the upper electrode 14, and a collector electrode 132 in the form of a transparent electrode, for example, is placed on the reverse side of the transparent plate 130 (which faces the upper electrode 14. The collector electrode 132 is coated with a phosphor 134. A bias voltage source 136 (collector voltage Vc) is connected to the collector electrode 32 through a resistor. The electron emitter 10A is placed in a vacuum. The vacuum level in the atmosphere should preferably in the range from $10^2$ to $10^{-6}$ Pa and more preferably in the range from $10^{-3}$ to $10^{-5}$ Pa.

The reason for the above range is that in a lower vacuum, (1) many gas molecules would be present in the space, and a plasma can easily be generated and, if intensive plasma were generated excessively, many positive ions would impinge upon the upper electrode 14 and damage the same, and (2) emitted electrons would tend to impinge upon gas molecules prior to arrival at the collector electrode 132, failing to sufficiently excite the phosphor 134 with electrons that are sufficiently accelerated under the collector voltage Vc.

In a higher vacuum, though electrons would be liable to be emitted from a point where electric field concentrates, structural body supports and vacuum seals would be large in size, posing disadvantages on efforts to make the emitter smaller in size.

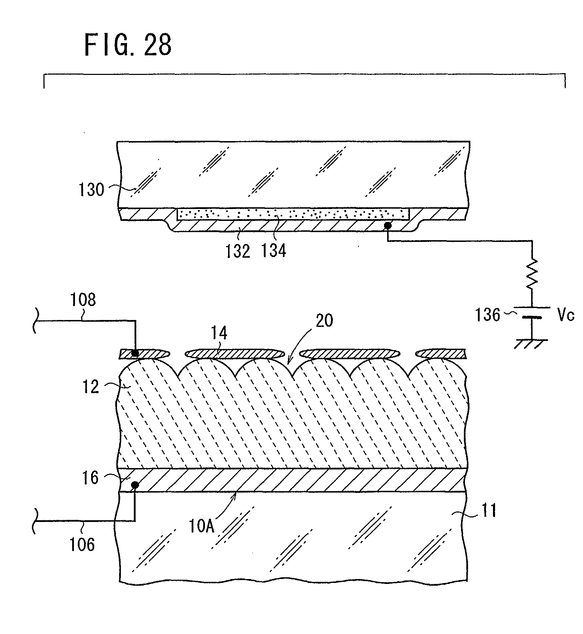

In the embodiment shown in FIG. 27, the collector electrode 132 is formed on the reverse side of the transparent plate 130, and the phosphor 134 is formed on the surface of the collector electrode 132 (which faces the upper electrode 14). According to another arrangement, as shown in FIG. 28, the phosphor 134 may be formed on the reverse side of the transparent plate 130, and the collector electrode 132 may be formed to cover the phosphor 134.

Such arrangement is for use in a CRT or the like where the collector electrode 132 functions as a metal back. Electrons emitted from the emitter section 12 pass through the collector electrode 132 into the phosphor 134, exciting the phosphor 134. Therefore, the collector electrode 132 is of a thickness which allows electrons to pass therethrough, preferably be 100 nm or less thick. As the kinetic energy of the emitted electrons is larger, the thickness of the collector electrode 132 may be increased.

This arrangement offers the following advantages:

(a) If the phosphor 134 is not electrically conductive, then the phosphor 134 is prevented from being charged (negatively), and an electric field for accelerating electrons can be maintained.
(b) The collector electrode 132 reflects light emitted from the phosphor 134, and discharges the light emitted from the phosphor 134 efficiently toward the transparent plate 130 (light emission surface).
(c) Electrons are prevented from impinging excessively upon the phosphor 134, thus preventing the phosphor 134 from being deteriorated and from producing a gas.

Four experimental examples (first through fourth experimental examples) of the electron emitter 10A according to the first embodiment will be shown.

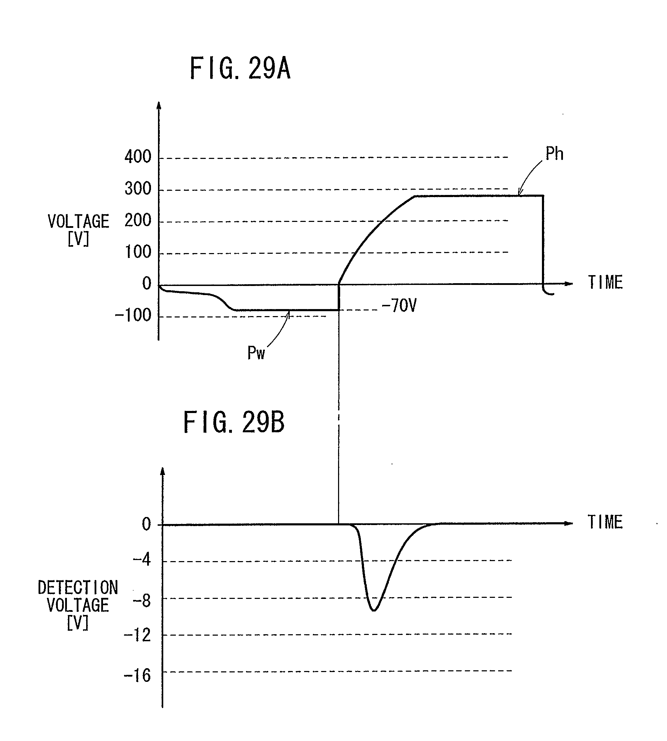

According to the first experimental example, the emission of electrons from the electron emitter 10A was observed. Specifically, as shown in FIG. 29A, a write pulse Pw having a voltage of - 70 V was applied to the electron emitter 10A to cause the electron emitter 10A to accumulate electrons, and thereafter a turn-on pulse Ph having a voltage of 280 V was applied to cause the electron emitter 10A to emit electrons. The emission of electrons was measured by detecting the light emission from the phosphor 134 with a light-detecting device (photodiode). The detected waveform is shown in FIG. 29B. The write pulse Pw and the turn-on pulse Ph had a duty cycle of 50 %.

It can be seen from the first experimental example that light starts to be emitted on a positive-going edge of the turn-on pulse Ph and the light emission is finished in an initial stage of the turn-on pulse Ph. Therefore, it is considered that the light emission will not be affected by shortening the period of the turn-on pulse Ph. This period shortening will lead to a reduction in the period in which the high voltage is applied, resulting in a reduction in power consumption.

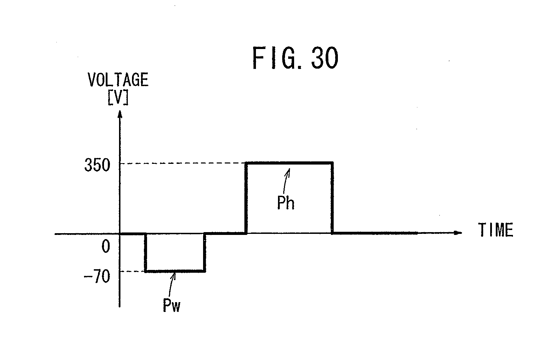

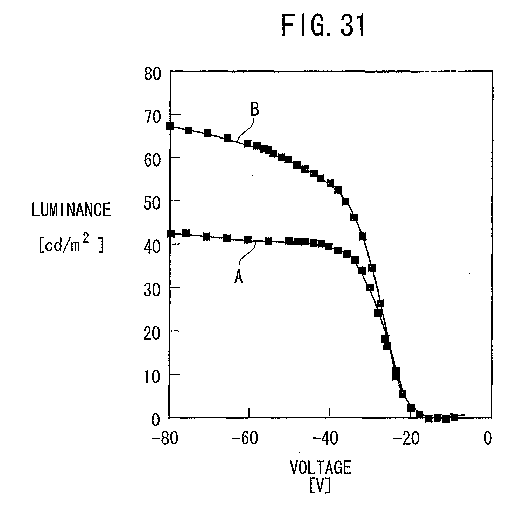

According to the second experimental example, how the amount of electrons emitted from the electron emitter 10A is changed by the amplitude of the write pulse Pw shown in FIG. 30 was observed. Changes in the amount of emitted electrons were measured by detecting the light emission from the phosphor 134 with a light-detecting device (photodiode), as with the first experimental example. The experimental results are shown in FIG. 31.

In FIG. 31, the solid-line curve A represents the characteristics at the time the turn-on pulse Ph had an amplitude of 200 V and the write pulse Pw had an amplitude changing from - 10 V to - 80 V, and the solid-line curve B represents the characteristics at the time the turn-on pulse Ph had an amplitude of 350 V and the write pulse Pw had an amplitude changing from - 10 V to - 80 V.

As illustrated in FIG. 31, when the write pulse Pw is changed from - 20 V to - 40 V, it can be understood that the light emission luminance changes substantially linearly. A comparison between the amplitudes 350 V and 200 V of the turn-on pulse Ph in particular indicates that a change in the light emission luminance in response to the write pulse Pw at the time the amplitude of the turn-on pulse Ph is 350 V has a wider dynamic range, which is advantageous for increased luminance and contrast for the display of images. This tendency appears to be more advantageous as the amplitude of the turn-on pulse Ph increases in a range until the light emission luminance is saturated with respect to the setting of the amplitude of the turn-on pulse Ph. It is preferable to set the amplitude of the turn-on pulse Ph to an optimum value in relation to the withstand voltage and power consumption of the signal transmission system.

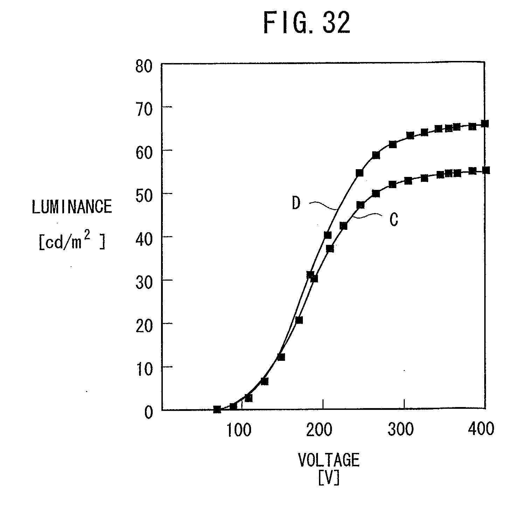

According to the third experimental example, how the amount of electrons emitted from the electron emitter 10A is changed by the amplitude of the turn-on pulse Ph shown in FIG. 30 was observed. Changes in the amount of emitted electrons were measured by detecting the light emission from the phosphor 134 with a light-detecting device (photodiode), as with the first experimental example. The experimental results are shown in FIG. 32.

In FIG. 32, the solid-line curve C represents the characteristics at the time the write pulse Pw had an amplitude of - 40 V and the turn-on pulse Ph had an amplitude changing from 50 V to 400 V, and the solid-line curve D represents the characteristics at the time the write pulse Pw had an amplitude of - 70 V and the turn-on pulse Ph had an amplitude changing from 50 V to 400 V.

As illustrated in FIG. 32, when the turn-on pulse Ph is changed from 100 V to 300 V, it can be understood that the light emission luminance changes substantially linearly. A comparison between the amplitudes -40 V and -70 V of the write pulse Pw in particular indicates that a change in the light emission luminance in response to the turn-on pulse Ph at the time the amplitude of the write pulse Pw is - 70 V has a wider dynamic range, which is advantageous for increased luminance and contrast for the display of images. This tendency appears to be more advantageous as the amplitude of the write pulse Pw increases in a range until the light emission luminance is saturated with respect to the setting of the amplitude of the write pulse Pw. It is preferable also in this case to set the amplitude (absolute value) of the write pulse Pw to an optimum value in relation to the withstand voltage and power consumption of the signal transmission system.

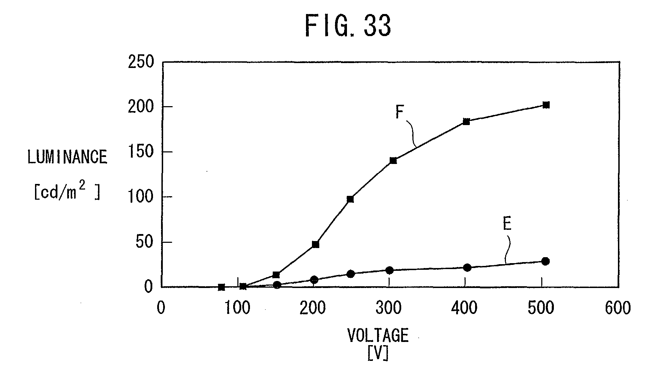

According to the fourth experimental example, how the amount of electrons emitted from the electron emitter 10A is changed by the level of the collector voltage Vc shown in FIG. 27 or 28 was observed. Changes in the amount of emitted electrons were measured by detecting the light emission from the phosphor 134 with a light-detecting device (photodiode), as with the first experimental example. The experimental results are shown in FIG. 33.

In FIG. 33, the solid-line curve E represents the characteristics at the time the level of the collector voltage Vc was 3 kV and the amplitude of the turn-on pulse Ph was changed from 80 V to 500 V, and the solid-line curve F represents the characteristics at the time the level of the collector voltage Vc was 7 kV and the amplitude of the turn-on pulse Ph was changed from 80 V to 500 V.

As illustrated in FIG. 33, it can be understood that a change in the light emission luminance in response to the turn-on pulse Ph has a wider dynamic range when the collector voltage Vc is 7 kV than when the collector voltage Vc is 3 kV, which is advantageous for increased luminance and contrast for the display of images. This tendency appears to be more advantageous as the level of the collector voltage Vc increases. It is preferable also in this case to set the level of the collector voltage Vc to an optimum value in relation to the withstand voltage and power consumption of the signal transmission system.

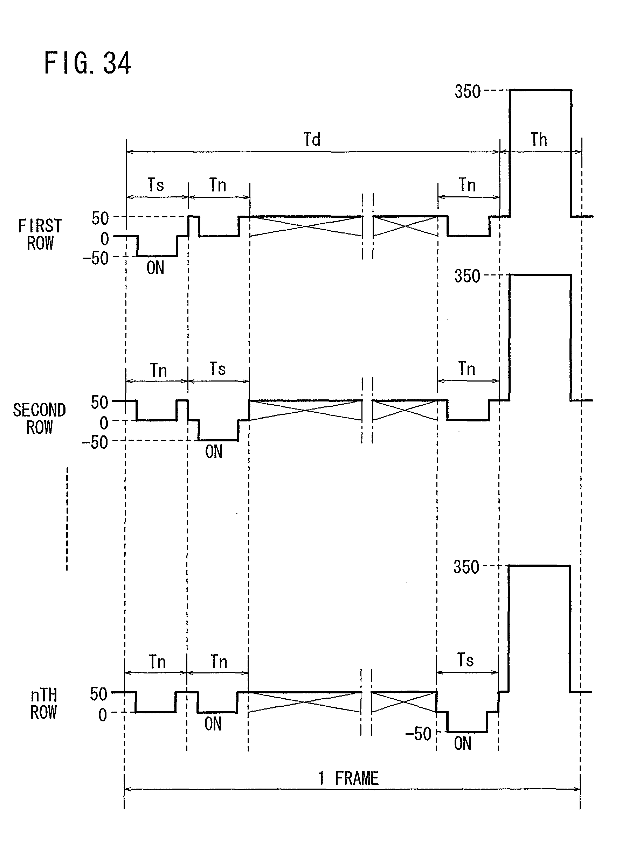

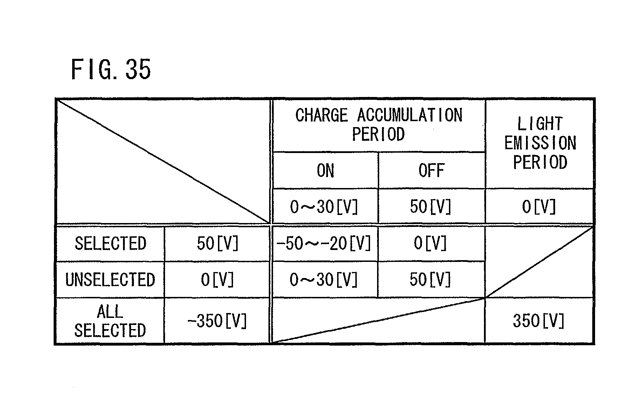

A drive method for the display 100 will be described below with reference to FIGS. 34 and 35. FIG. 34 shows operation of pixels (light-emission elements) in the first row and the first column, the second row and the first column, and the nth row and the first column. The electron emitter 10A used in the first drive method has such characteristics that the coercive voltage v1 at the point p2 shown in FIG. 19 is - 20 V, for example, the coercive voltage v2 at the point p5 is + 70 V, the voltage v3 at the point p3 is - 50 V, and the voltage v4 at the point p4 is + 50 V.

As shown in FIG. 34, if the period in which to display one image is defined as one frame, then one charge accumulation period Td and one light emission period Th are included in one frame, and n selection periods Ts are included in one charge accumulation period Td. Since each selection period Ts becomes a selection period Ts for a corresponding row, it becomes a non-selection period Tn for non-corresponding n-1 rows.

According to this drive method, all the electron emitters 10A are scanned in the charge accumulation period Td, and voltages depending on the luminance levels of corresponding pixels (light-emission elements) are applied to a plurality of electron emitters 10A which correspond to pixels (light-emission elements) to be turned on (to emit light), thereby accumulating charges (electrons) in amounts depending on the luminance levels of the corresponding pixels (light-emission elements) in the electron emitters 10A which correspond to the pixels (light-emission elements) to be turned on. In the next light emission period Th, a constant voltage is applied to all the electron emitters 10A to cause the electron emitters 10A which correspond to the pixels (light-emission elements) to be turned on to emit electrons in amounts depending on the luminance levels of the corresponding pixels (light-emission elements), thereby emitting light from the pixels (light-emission elements) to be turned on.

More specifically, as shown in FIG. 35, in the selection period Ts for the first row, a selection signal Ss of 50 V, for example, is supplied to the row selection line 106 of the first row, and a non-selection signal Sn of 0 V, for example, is supplied to the row selection lines 106 of the other rows. A data signal Sd supplied to the signal lines 108 of the pixels (light-emission elements) to be turned on (to emit light) of all the pixels (light-emission elements) of the first row has a voltage in the range from 0 V to 30 V, depending on the luminance levels of the corresponding pixels (light-emission elements). If the luminance level is maximum, then the voltage of the data signal Sd is 0 V. The data signal Sd is modulated depending on the luminance level by the amplitude modulating circuit 122 shown in FIG. 22 or the pulse width modulating circuit 126 shown in FIG. 24.

Thus, a voltage ranging from - 50 V to - 20 V depending on the luminance level is applied between the upper and lower electrodes 14, 16 of the electron emitter 10A which corresponds to each of the pixels (light-emission elements) to be turned on in the first row. As a result, each electron emitter 10A accumulates electrons depending on the applied voltage. For example, the electron emitter section 12 corresponding to the pixel in the first row and the first column is in a state at the point p3 shown in FIG. 19 as the luminance level of the pixel is maximum, and the portion of the emitter section 12 which is exposed through the through region 20 of the upper electrode 14 accumulates a maximum amount of electrons.

A data signal Sd supplied to the electron emitters 10A which correspond to pixels (light-emission elements) to be turned off (to extinguish light) has a voltage of 50 V, for example. Therefore, a voltage of 0 V is applied to the electron emitters 10A which correspond to pixels (light-emission elements) to be turned off, bringing those electron emitters 10A into a state at the point p1 shown in FIG. 19, so that no electrons are accumulated in those electron emitters 10A.

After the supply of the data signal Sd to the first row is finished, in the selection period Ts for the second row, a selection signal Ss of 50 V is supplied to the row selection line 106 of the second row, and a non-selection signal Sn of 0 V is supplied to the row selection lines 106 of the other rows. In this case, a voltage ranging from -50 V to - 20 V depending on the luminance level is also applied between the upper and lower electrodes 14, 16 of the electron emitter 10A which corresponds to each of the pixels (light-emission elements) to be turned on. At this time, a voltage ranging from 0 V to 50 V is applied between the upper and lower electrodes 14, 16 of the electron emitter 10A which corresponds to each of unselected pixels (light-emission elements) in the first row, for example. Since this voltage is of a level not reaching the point 4 in FIG. 19, no electrons are emitted from the electron emitters 10A which correspond to the pixels (light-emission elements) to be turned on in the first row. That is, the unselected pixels (light-emission elements) in the first row are not affected by the data signal Sd that is supplied to the selected pixels (light-emission elements) in the second row.

Similarly, in the selection period Ts for the nth row, a selection signal Ss of 50 V is supplied to the row selection line 106 of the nth row, and a non-selection signal Sn of 0 V is supplied to the row selection lines 106 of the other rows. In this case, a voltage ranging from -50 V to - 20 V depending on the luminance level is also applied between the upper and lower electrodes 14, 16 of the electron emitter 10A which corresponds to each of the pixels (light-emission elements) to be turned on. At this time, a voltage ranging from 0 V to 50 V is applied between the upper and lower electrodes 14, 16 of the electron emitter 10A which corresponds to each of unselected pixels (light-emission elements) in the first through (n-1)th rows. However, no electrons are emitted from the electron emitters 10A which correspond to the pixels (light-emission elements) to be turned on, of those unselected pixels (light-emission elements).

After elapse of the selection period Ts for the nth row, it is followed by the light emission period Th. In the light emission period Th, a reference voltage (e.g., 0 V) is applied from the signal supplying circuit 112 to the upper electrodes 14 of all the electron emitters 10A, and a voltage of - 350 V (the sum of the voltage of - 400 V from the pulse power supply 118 and the power supply voltage 50 V from the row selecting circuit 110) is applied to the lower electrodes 16 of all the electron emitters 10A. Thus, a high voltage (+ 350 V) is applied between the upper and lower electrodes 14, 16 of all the electron emitters 10A. All the electron emitters 10A are now brought into a state at the point p6 shown in FIG. 19. As shown in FIG. 21C, electrons are emitted from the portion of the emitter section 12 where the electrons have been accumulated, through the through region 20. Electrons are also emitted from the regions near the outer peripheral portion of the upper electrode 14.

Electrons are thus emitted from the electron emitters 10A which correspond to the pixels (light-emission elements) to be turned on, and the emitted electrons are led to the collector electrodes 132 which correspond to those electron emitters 10A, exciting the corresponding phosphors 134 which emit light. In this manner, an image is displayed on the surface of the transparent plate 130.

Subsequently, electrons are accumulated in the electron emitters 10A which correspond to the pixels (light-emission elements) to be turned on (to emit light) in the charge accumulation period Td, and the accumulated electrons are emitted for fluorescent light emission in the light emission period Th, for thereby displaying a moving image or a still image on the surface of the transparent plate 130.

Thus, the electron emitter according to the first embodiment can easily be applied to the display 100 which has a plurality of electron emitters 10A arrayed in association with respective pixels (light-emission elements) for emitting electrons from the electron emitters 10A to display an image.

For example, as described above, in the charge accumulation period Td in one frame, all the electron emitters 10A are scanned, and voltages depending on the luminance levels of corresponding pixels (light-emission elements) are applied to a plurality of electron emitters 10A which correspond to pixels (light-emission elements) to be turned on, thereby accumulating charges in amounts depending on the luminance levels of the corresponding pixels (light-emission elements) in the electron emitters 10A which correspond to the pixels (light-emission elements) to be turned on. In the next light emission period Th, a constant voltage is applied to all the electron emitters 10A to cause the electron emitters 10A which correspond to the pixels (light-emission elements) to be turned on to emit electrons in amounts depending on the luminance levels of the corresponding pixels, thereby emitting light from the pixels (light-emission elements) to be turned on.

According to the first embodiment, the voltage V3 at which the accumulation of electrons is saturated and the voltage V4 at which electrons start being emitted are related to each other by $1 \leq |V4|/|V3| \leq 1.5$.

Usually, when the electron emitters 10A are arranged in a matrix and selected row by row in synchronism with the horizontal scanning period, and data signals Sd depending on the luminance levels of pixels (light-emission elements) are supplied to the selected electron emitters 10A, the data signals Sd are also supplied to unselected pixels (light-emission elements).

If the unselected electron emitters 10A are affected by the data signals Sd and emit electrons, then problems arise in that the quality of displayed images is degraded and the contrast thereof is lowered.

However, in the first embodiment, the electron emitter 10A has the above characteristics. Therefore, even if a simple voltage relationship is employed such that the voltage level of the data signal Sd supplied to the selected electron emitters 10A is set to an arbitrary level from the reference voltage to the voltage V3, and a signal which is opposite in polarity to the data signal Sd, for example, is supplied to the unselected electron emitters 10A, the unselected pixels (light-emission elements) are not affected by the data signal Sd supplied to the selected pixels (light-emission elements). That is, the amount of electrons accumulated by each electron emitter 10A (the amount of charges in the emitter 12 of each electron emitter 10A) in the selection period Ts is maintained until electrons are emitted in the next light emission period Th. As a result, a memory effect is realized in each pixel (light-emission element) for higher luminance and higher contrast.

In the display 100, necessary charges are accumulated in all the electron emitters 10A in the charge accumulation period Td. In the subsequent light emission period Th, a voltage required to emit electrons is applied to all the electron emitters 10A to cause a plurality of electron emitters 10A which correspond to the pixels (light-emission elements) to be turned on to emit the electrons for thereby emitting light from the pixels (light-emission elements) to be turned on.

Usually, if pixels (light-emission elements) are made up of electron emitters 10A, then a high voltage needs to be applied to the electron emitters 10A to emit light from the pixels (light-emission elements). Therefore, for accumulating charges in the pixels (light-emission elements) and emitting light from the pixels (light-emission elements) when the pixels (light-emission elements) are scanned, a high voltage needs to be applied to the pixels (light-emission elements) during a period (e.g., one frame) for displaying one image, resulting in the problem of increased electric power consumption.

Circuits for selecting electron emitters 10A and supplying the data signals Sd to the selected electron emitters 10A need to be able to handle the high voltage.

However, according to the present embodiment, after charges have been accumulated in all the electron emitters 10A, a voltage is applied to all the electron emitters 10A, emitting light from the pixels (light-emission elements) which correspond to the electron emitters 10A to be turned on.

Therefore, the period Th during which a voltage (emission voltage) for emitting electrons is applied to all the electron emitters 10A is necessarily shorter than one frame. As can be seen from the first experimental example shown in FIGS. 29A and 29B, since the period during which to apply the emission voltage can be reduced, the power consumption can be made much smaller than if charges are accumulated and light is emitted when the pixels (light-emission elements) are scanned.

Because the period Td for accumulating charges in electron emitters 10A and the period Th for emitting electrons from electron emitters 10A which correspond to the pixels (light-emission elements) to be turned on are separated from each other, the circuit for applying voltages depending on luminance levels to the electron emitters 10A can be driven at a low voltage.

The data signal depending on an image and the selection signal Ss/non-selection signal Sn in the charge accumulation period Td need to be applied for each row or each column. As can be seen from the above embodiment, as the drive voltage may be of several tens of volts, an inexpensive multi-output driver for use with fluorescent display tubes may be used. In the light emission period Th, a voltage for emitting sufficient electrons is likely to be higher than the drive voltage. Since all the pixels (light-emission elements) to be turned on may be driven altogether, no multi-output circuit component is required. For example, a one-output drive circuit in the form of a discrete component having a high withstand voltage may be sufficient. Therefore, the drive circuit may be inexpensive and may be small in circuit scale. The drive voltage and discharge voltage may be lowered by reducing the film thickness of the emitter 12. For example, the drive voltage may be set to several volts by setting the film thickness of the emitter 12.

According to the present drive method, furthermore, electrons are emitted in the second stage from all the pixels (light-emission elements), independent of the row scanning, separately from the first stage based on the row scanning. Consequently, the light emission time can easily be maintained for increased luminance irrespective of the resolution and the screen size. Since electrons are emitted from all the pixels (light-emission elements) to display as video image, no false contour or image blur occurs in the moving image.

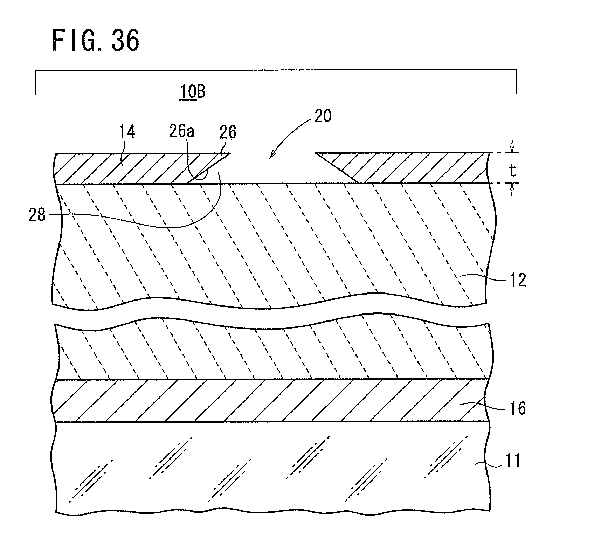

An electron emitter 10B according to a second embodiment will be described below with reference to FIG. 36.

As shown in FIG. 36, the electron emitter 10B according to the second embodiment is of an arrangement that is essentially the same as the electron emitter 10A according to the first embodiment, but is characterized in that the upper electrode 14 and the lower electrode 16 are made of the same material, the upper electrode 14 has a thickness t greater than 10 μm, and the through region 20 is artificially formed by etching (wet etching or dry etching), liftoff, laser, etc. The through region 20 may be shaped as the hole 32, the recess 44, or the slit 48 as with the first embodiment.

The lower surface 26a of the peripheral portion 26 of the through region 20 in the upper electrode 14 is inclined progressively upwardly toward the center of the through region 20. This shape may simply be formed by liftoff, for example.

The electron emitter 10B according to the second embodiment is capable of easily producing a high electric field concentration as with the electron emitter 10A according to the first embodiment. The electron emitter 10B according to the second embodiment is also capable of providing many electron emission regions for a larger output and higher efficiency of the electron emission, and can be driven at a lower voltage (lower power consumption). In the embodiment also, since the glass substrate 11 is employed, it is possible to produce a large panel, and reduce the production cost.

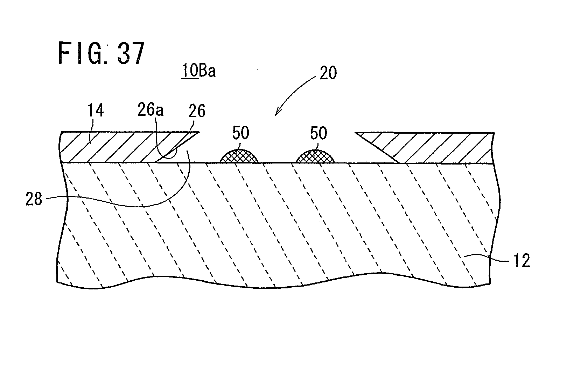

In an electron emitter 10Ba according to a first modification shown in FIG. 37, floating electrodes 50 may be present on a region of the upper surface of the emitter section 12 which corresponds to the through region 20.

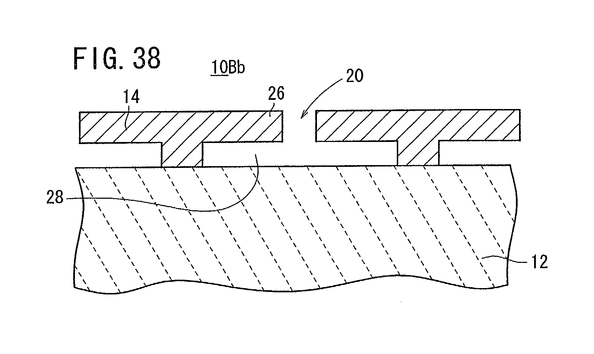

In an electron emitter 10Bb according to a second modification shown in FIG. 38, an electrode having a substantially T-shaped cross-sectional shape may be formed as the upper electrode 14.

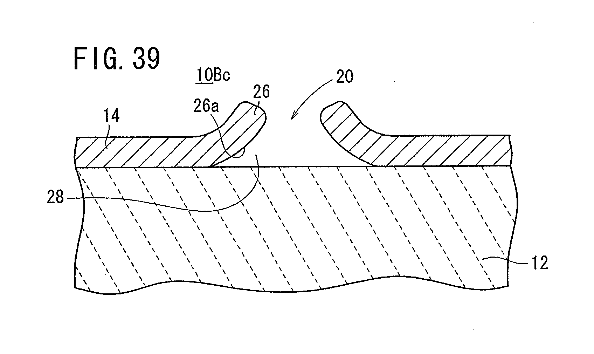

In an electron emitter 10Bc according to a third modification shown in FIG. 39, the upper electrode 14, particularly, the peripheral portion 26 of the through region 20 of the upper electrode 14, may be raised. This configuration may be achieved by including a material which will be gasified in the sintering process in the film material of the upper electrode 14. In the sintering process, the material is gasified, forming a number of through regions 20 in the upper electrode 14 with the peripheral portions 26 of the through regions 20 being raised.

**Claims**

1. An electron emitter comprising:

   a first electrode (16) formed on a glass substrate (11) ;
   an emitter section (12) made of a dielectric film formed on said first electrode (16);

a second electrode (14) formed on said emitter section (12), wherein

a drive voltage (Va) for electron emission is applied between said first electrode (16) and said second electrode (14);

at least said second electrode (14) has a plurality of through regions (20) through which said emitter section (12) is exposed; and

said second electrode (14) has a surface (26a) which faces said emitter section (12) in peripheral portions (26) of said through region (20) and which is spaced from said emitter section (12).

2.  An electron emitter according to claim 1, wherein at least a surface of said emitter section (12) for forming said second electrode (14) has surface irregularities (22) due to the grain boundary of the dielectric material, and said through regions (20) of said second electrode (14) are formed in regions corresponding to concavities (24) of the surface irregularities (22) due to the grain boundary of the dielectric material.

3.  An electron emitter according to claim 1 or 2, wherein said second electrode (14) is in the form of a cluster (17) of a plurality of scale-like substances (15) or a cluster (21) of a plurality of electrically conductive substances (19) including scale-like substances (15).

4.  An electron emitter according to any one of claims 1 to 3, wherein said first electrode (16), said emitter section (12), and said second electrode (14) are directly deposited on said glass substrate (11) at a temperature not greater than a softening point of said glass substrate (11).

5.  An electron emitter according to any one of claims 1 to 3, wherein said emitter section (12) is formed by gluing a sheet formed at a temperature not greater than a softening point of said glass substrate (11) on said glass substrate (11).

6.  An electron emission device including a plurality of electron emitters (10A) formed on a glass substrate (11), said electron emitters (10A) each comprising:

a first electrode (16) formed on said glass substrate (11) ;
an emitter section (12) made of a dielectric film formed on said first electrode (16);
a second electrode (14) formed on said emitter section (12), wherein

a drive voltage (Va) for electron emission is applied between said first electrode (16) and said second electrode (14);

at least said second electrode (14) has a plurality of through regions (20) through which said emitter section (12) is exposed; and

said second electrode (14) has a surface (26a) which faces said emitter section (12) in peripheral portions (26) of said through region (20) and which is spaced from said emitter section (12).

7.  A display comprising the electron emission device according to claim 6, said display further comprising:

a transparent plate (130) facing a surface of said glass substrate (11) on which said emitter section (12) of said electron emission device is formed;
an electrode (132) formed on a surface of said transparent plate (130) facing said emitter section (12) for generating an electric field between said electrode (132) and said electron emitter (10A) of said electron emission device; and
a phosphor (134) formed on said electrode (132);

wherein said phosphor (134) is energized to emit light when electrons emitted from said electron emitter (10A) impinge on said phosphor (134).

8.  A light source comprising the electron emitter according to claim 6, said light source further comprising:

a transparent plate (130) facing a surface of said glass substrate (11) on which said emitter section (12) of said electron emission device is formed;
an electrode (132) formed on a surface of said transparent plate (130) facing said emitter section (12) for generating an electric field between said electrode (132) and said electron emitter (10A) of said electron emission device; and
a phosphor (134) formed on said electrode (132);

wherein said phosphor (134) is energized to emit light when electrons emitted from said electron emitter (10A) impinge on said phosphor (134).

EP 1 521 231 A2

FIG. 1

# FIG. 2

<u>10A</u>

EP 1 521 231 A2

FIG. 3

EP 1 521 231 A2

# FIG. 4

24

# FIG. 5A

# FIG. 5B

FIG. 6A

FIG. 6B

EP 1 521 231 A2

# FIG. 7

FIG. 8

# FIG. 9

FIG. 10

FIG. 11

FIG. 12

FIG. 13

FIG. 14

FIG. 15

FIG. 16     10Aa

## FIG. 17

# FIG. 18

# FIG. 19

FIG. 20A

14 20

12

16

11

FIG. 20B

14 20

REVERSAL $\left(\begin{array}{c}+\\-\end{array}\right)$ $\left(\begin{array}{c}+\\-\end{array}\right)$ REVERSAL

12

16 + + +

FIG. 20C

20

14

$e^-$ $e^-$

$e^-$ $e^-$

$\left(\begin{array}{c}+\\-\end{array}\right)$ $\left(\begin{array}{c}+\\-\end{array}\right)$

12

16 + + +

FIG. 21A

14    20

FIG. 21B

14    20

FIG. 21C

14    20

# FIG. 22

EP 1 521 231 A2

FIG. 23A

FIG. 23B

FIG. 23C

EP 1 521 231 A2

FIG. 24

112a

```
┌─────────────────────────────────────────────┐
│          ┌─────────────────────┐             │
│          │  PULSE GENERATING   │             │
│          │      CIRCUIT        │             │
│          └─────────────────────┘             │
│            Spa ↓        124        126       │
│          ┌───────────────────────────────┐   │
│          │ PULSE WIDTH MODULATING CIRCUIT │  │
│          └───────────────────────────────┘   │
│            │           │           │         │
└────────────┼───────────┼───────────┼─────────┘
             │ ~108      │ ~108      │ ~108
          Sd ↓                                 • • •
```

FIG. 25A

FIG. 25B

FIG. 25C

EP 1 521 231 A2

FIG. 26A

FIG. 26B

FIG. 26C

FIG. 27

## FIG. 28

## FIG. 29A

## FIG. 29B

# FIG. 30

FIG. 31

# FIG. 32

FIG. 33

EP 1 521 231 A2

# FIG. 34

FIG. 35

| | | CHARGE ACCUMULATION PERIOD | | LIGHT EMISSION PERIOD |
|---|---|---|---|---|
| | | ON | OFF | |
| | | 0～30[V] | 50[V] | 0[V] |
| SELECTED | 50[V] | −50～−20[V] | 0[V] | |
| UNSELECTED | 0[V] | 0～30[V] | 50[V] | |
| ALL SELECTED | −350[V] | | | 350[V] |

FIG. 36

FIG. 37

FIG. 38    10Bb

FIG. 39

FIG. 40

200

e⁻

204

202

206